(19) Europäisches Patentamt / European Patent Office / Office européen des brevets

(11) **EP 4 203 686 B1**

(12) **EUROPEAN PATENT SPECIFICATION**

(45) Date of publication and mention
of the grant of the patent:
**28.01.2026   Bulletin 2026/05**

(21) Application number: **21871784.1**

(22) Date of filing: **22.09.2021**

(51) International Patent Classification (IPC):
*A01N 43/12* (2006.01)   *A01N 59/02* (2006.01)
*A01P 7/04* (2006.01)   *A01N 43/40* (2006.01)
*A01N 43/90* (2006.01)   *C01B 17/04* (2006.01)

(52) Cooperative Patent Classification (CPC):
(C-Sets available)
**C01B 17/00; A01N 43/12; A01P 7/04; Y02A 50/30**
(Cont.)

(86) International application number:
**PCT/IB2021/058628**

(87) International publication number:
**WO 2022/064375 (31.03.2022 Gazette 2022/13)**

(54) **PESTICIDAL COMPOSITION COMPRISING ELEMENTAL SULPHUR AND FLUPYRADIFURONE**

PESTIZIDZUSAMMENSETZUNG MIT ELEMENTAREM SCHWEFEL UND FLUPYRADIFURON

COMPOSITION PESTICIDE COMPRENANT DU SOUFRE ÉLÉMENTAIRE ET DU FLUPYRADIFURONE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Validation States:
**MA TN**

(30) Priority:  **23.09.2020  IN 202021041292**

(43) Date of publication of application:
**05.07.2023   Bulletin 2023/27**

(73) Proprietor: **Doshi, Hiteshkumar Anilkant
Thane 400 606, Maharashtra (IN)**

(72) Inventor: **Doshi, Hiteshkumar Anilkant
Thane 400 606, Maharashtra (IN)**

(74) Representative: **JD&P Patent Attorneys
Joanna Dargiewicz & Partners
ul. Mysliborska 93A/50
03-185 Warszawa (PL)**

(56) References cited:
WO-A1-2018/051372     US-A1- 2015 230 475
US-A1- 2015 296 773     US-A1- 2018 325 105

• JESCHKE PETER ET AL: "Flupyradifurone
(Sivanto(TM)) and its novel butenolide
pharmacophore: Structural considerations*",
PESTICIDE BIOCHEMISTRY AND PHYSIOLOGY,
ACADEMIC PRESS, US, vol. 121, 24 October
2014 (2014-10-24), pages 31 - 38, XP029613642,
ISSN: 0048-3575, DOI: 10.1016/
J.PESTBP.2014.10.011

Remarks:
The file contains technical information submitted after the application was filed and not included in this specification

**(Cont. next page)**

(52) Cooperative Patent Classification (CPC): (Cont.)

C-Sets
**A01N 43/12, A01N 59/02**

**Description**

**1. FIELD OF THE INVENTION**

The present invention relates to a pesticidal composition comprising elemental sulphur; flupyradifurone; and at least one agrochemically acceptable excipient. The present invention relates to a pesticidal composition comprising elemental sulphur present in the range of 1% w/w to 95% w/w of the total composition; flupyradifurone present in the range of 0.01%w/w to 70% w/w of the total composition; and at least one agrochemically acceptable excipient. The pesticidal composition is in the form of wettable powder, water dispersible granules, broadcast granules or water disintegrable granules or spheronised granules, liquid suspension or suspension concentrate, flowable concentrate. Further, the pesticidal composition comprises particles in the size range of from 0.1 micron to 50 microns.

The invention further relates to a process of preparing the pesticidal composition comprising elemental sulphur present in the range of 1%w/w to 95% w/w of the total composition; flupyradifurone present in the range of 0.01%w/w to 70% w/w of the total composition; and at least one agrochemically acceptable excipient.

The invention furthermore also relates to a method of treating a plant, crop, plant propagation material, locus or parts thereof, a seed, seedling or surrounding soil with the pesticidal composition.

**2. BACKGROUND OF THE INVENTION**

In describing the embodiment of the invention, specific terminology is chosen for the sake of clarity.

The pesticidal efficacy of known compounds is not satisfactory for example in the area of pest control. On account of diverse practises in different regions, pesticides at times are administered at relatively higher dosages which eventually result in developing resistance among the pests thereby leading to soil toxicity and other environmental hazards besides higher economic cost.

The current pesticidal combinations available are old chemistries and repeated use of such chemical combinations have caused problems in insect pest population management like insecticide resistance, pest resurgence, secondary pest outbreak, residue related problems, toxic effect on human beings and reduced yield. Moreover, insect species such as aphids, thriphs, beetles, mites, whiteflies etc are known to be among the most destructive pests in the world, transmitting plant pathogenic viruses/bacteria and causing feeding damage on numerous annual and perennial crops. Such pests are not easily controlled, so there is a need for corrective treatments to keep them under economic damage. Some sucking pest species have developed resistance to virtually all chemical classes of insecticides introduced to control them.

Thus, in order to enhance pest control and subsequently promote yield there exist a continuous need of new selective insecticides which will replace older chemistry suffering from resistance development in many pests frequently targeted by indispensable chemical treatments in some agricultural settings. There also exist a need of new pesticides with modern integrated pest management for an improved toxicological and environmental profile such as reduced phytotoxicity, resistance management, reduced dosage, substantial broadening of spectrum and increased safety to humans and environment to name a few.

Butenolide insecticides are a new class of insecticides which are systemic in nature. The butenolide acts as an agonist by binding to the receptor protein which induces a depolarising ion current and subsequent excitation of the nerve cell. Flupyradifurone, a butenolide insecticide is a tertiary amino compound that is ammonia in which the nitrogens have been replaced by (6-chloropyridin-3-yl) methyl, 2,2-difluoroethyl, and 5-oxo-2,5-dihydrofuran-3-yl groups, respectively. Flupyradifurone being similar in action but different in chemistry to the neonicotinoids is effectively used for the control of several pest species particularly sucking pest which are resistant to commercially available insecticides.

The role and benefits of sulphur as a pesticide has been known for a long time. The benefits of sulphur not only encompasses reduced dependency on use of chemicals as an effective mode of pest control but being organic in nature it is also environment friendly, increases crop yield, improves food safety, human, animal or plant health and quality of life. Sulphur is an essential nutrient for the growth and development of all crops. It is used in the synthesis of amino acids, proteins, chlorophyll formation, promoting nodulation in legumes and also in developing and activate certain enzymes and vitamins necessary for the growth and nutritive value of crops. The use of sulphur as a fungicide, acaricide and miticide is of special importance and has been long used as an environment friendly mode of farming practice.

Pesticidal composition comprising flupyradifurone are known in the art but there is no disclosure of a specific combination comprising flupyradifurone and elemental sulphur.

Jeschke Peter et. al. (Flupyradifurone (Sivanto™) and its novel butenolide pharmacophore: structural considerations) discloses Flupyradifurone as modern insecticide which provides control over many sucking pests.

US2015/230475 discloses a pesticidal composition comprising Sulphur in combination with at least one insecticide selected from the group consisting of cartap fipronil, pirimicarb, buprofeZine, thiachloprid, acetamiprid, clothianidin, diafenthiuron, novaluron, flubendiamide, Spirotetramat, thiamethoxam and imidacloprid. However, the application is silent with respect to combination of sulphur with flupyradifurone.

WO2018195256 relates to an agrochemical composition comprising antioxidants and/or nutrients and agriculturally suitable auxiliaries, solvents, carriers, surfactants or extenders for improving crop safety. The composition comprises antioxidants and/or nutrients used with Flupyradifurone. However, the application is silent on specific combination of sulphur and flupyradifurone.

WO2019064283A1, WO2020/061706 claims a synergistic pesticidal composition comprising; a pesticidal active ingredient and a saturated aliphatic acid or an agriculturally compatible salt thereof wherein pesticidal active ingredient comprises at least one active selected from the list comprising respiratory inhibitors, Sterol biosynthesis inhibitors.....nucleic acid synthesis inhibitor, inhibitors of cell division, inorganic compounds...... herbicides, insecticides. The application claims sulphur in list of inorganic compounds and flupyradifurone in the list of insecticides to be included in the composition. However, the application is silent on specific combination of sulphur and flupyradifurone.

Thus, no pesticidal composition comprising specific combination of elemental sulphur and flupyradifurone is known or available which can be effectively used at lower dosage and address the limitations as observed with the known compositions.

The inventors of the present invention have surprisingly developed a stable composition of elemental sulphur and flupyradifurone in an effective amount which is synergistic in nature and demonstrates excellent field efficacy. The inventors have found that a composition comprising elemental sulphur and flupyradifurone is synergistic, act as a superior crop-protectant, non-phytotoxic, effective at a lower dosage, reduces application of chemical crop protection agents, and help in resistance management of old pesticide chemistry.

In addition to the synergistic effect of the composition of the present invention, the inventors surprisingly determined that the composition comprising elemental sulphur and flupyradifurone in an effective amount in the form of liquid or granules or powders provides protection against plant pathogens and improves yield when the particles in the composition are present in the size range of 0.1 micron to 50 microns. The pesticidal combination with a particle size in the range of 0.1 micron to 50 microns enhances the physical nature of the formulation by providing improved suspensibility, dispersibility, viscosity and pourability on application via soil or foliar route which provides effective control of target pathogens. The particle size of 0.1 micron to 50 microns results in covering larger area which enhances adhesion and provides better penetration of active moieties when applied to the foliage and are also better absorbed by the roots when applied to the surrounding soil improving their efficacy and bioavailability.

Thus, researchers of the present invention have developed a stable pesticidal composition comprising elemental sulphur in the range of 1% w/w to 95%w/w of the total composition; flupyradifurone present in the range of 0.01% w/w to 70% w/w of the total composition; and at least one agrochemically acceptable excipient. The composition have particles in the size range of 0.1 to 50 microns. The pesticidal composition is synergistic and provides surprising results not only as a crop protection agent but also as a yield enhancer.

## 3. SUMMARY OF THE INVENTION

The invention relates to a pesticidal composition, comprising elemental sulphur; flupyradifurone. The invention relates to a pesticidal composition, comprising elemental sulphur in the range of 1% w/w to 95% w/w of the total composition; flupyradifurone present in the range of 0.01%w/w to 70% w/w of the total composition; and at least one agrochemically acceptable excipient.

The composition comprises of particles in the size range of 0.1 micron to 50 microns.

Further, the pesticidal composition is in the form of wettable powder, water dispersible granules, broadcast granules or water disintegrable granules or spheronised granules, liquid suspension or suspension concentrate, flowable concentrate.

The invention also relates to a process for preparing the pesticidal composition comprising elemental sulphur in the range of 1% w/w to 95% w/w of the total composition; flupyradifurone in the range of 0.01%w/w to 70% w/w of the total composition; and at least one agrochemically acceptable excipient.

According to another embodiment, the invention also relates to method of protection of crop or improving its health or yield, by treating at least one of a plant, crop, or parts thereof, a plant propagation material, seed, seedling or surrounding soil with a pesticidal composition.

## 4. DETAILED DESCRIPTION OF THE INVENTION

In describing the embodiment of the invention, specific terminology is chosen for the sake of clarity. It is understood that any numerical range recited herein is intended to include all subranges subsumed. Also, unless denoted otherwise percentage of components in a composition are presented as weight percent.

The terms "a" or "an", as used herein, are defined as one or more than one. The terms "including" and/or "having", as used herein, are defined as comprising (i.e., open language).

A water dispersible granule is defined as a formulation which disperses or dissolves rapidly when added to water to give a fine particle suspension. As described herein, "WG" or "WDG" refer to water dispersible granules. Waterdispersible granules are formulated as small, easily measured granules (an agglomeration of fine particles) by blending and agglomerating a ground solid active ingredient together with surfactants and other formulation ingredients which disperses into finer/primary particles when immersed in water.

According to the invention, the term liquid suspension encompasses "aqueous suspension" or aqueous dispersion" or "suspension concentrates (SC)" or "suspoemulsion (SE)" composition. Liquid suspension can be defined as composition wherein solid particles are dispersed or suspended in a liquid. The liquid as a vehicle can be water and/or a water miscible solvent.

As defined herein, WP refers to a wettable powder, which can be a powder formulation to be applied as a suspension after dispersion in water.

The present invention relates to a pesticidal composition comprising elemental sulphur; flupyradifurone; and at least one agrochemically acceptable excipient.

The present invention relates to a pesticidal composition, comprising elemental sulphur in the range of 1% w/w to 95% w/w of the total composition, flupyradifurone present in the range of 0.01% w/w to 70% w/w of the total composition, and at least one agrochemical excipient.

According to an embodiment, elemental sulphur is present in the range of 1% w/w to 95% w/w of the total composition. According to an embodiment, elemental sulphur is present in the range of 1% w/w to 90% w/w of the total composition. According to an embodiment, elemental sulphur is present in the range of 1% w/w to 85% w/w of the total composition. According to an embodiment, elemental sulphur is present in the range of 1% w/w to 80% w/w of the total composition. According to an embodiment, elemental sulphur is present in the range of 1% w/w to 70% w/w of the total composition. According to an embodiment, elemental sulphur is present in the range of 1% w/w to 60% w/w of the total composition. According to an embodiment, elemental sulphur is present in the range of 10% w/w to 95% w/w of the total composition. According to an embodiment, elemental sulphur is present in the range of 10% w/w to 90% w/w of the total composition. According to an embodiment, elemental sulphur is present in the range of 10% w/w to 80% w/w of the total composition. According to an embodiment, elemental sulphur is present in the range of 10% w/w to 70% w/w of the total composition. According to an embodiment, elemental sulphur is present in the range of 10% w/w to 60% w/w of the total composition. According to an embodiment, elemental sulphur is present in the range of 20% w/w to 95% w/w of the total composition.

According to an embodiment, flupyradifurone is present in the range of 0.01% to 70% w/w of the total composition. According to an embodiment, flupyradifurone is present in the range of 0.01% to 60% w/w of the total composition. According to an embodiment, flupyradifurone is present in the range of 0.01% to 50% w/w of the total composition. According to an embodiment, flupyradifurone is present in the range of 0.01% to 40% w/w of the total composition. According to an embodiment, flupyradifurone is present in the range of 0.01% to 30% w/w of the total composition. According to an embodiment, flupyradifurone is present in the range of 0.01% to 20% w/w of the total composition. According to an embodiment, flupyradifurone is present in the range of 0.01% to 15% w/w of the total composition. According to an embodiment, flupyradifurone is present in the range of 0.01% to 10% w/w of the total composition.

According to an embodiment, the pesticidal composition can be in the form of a solid a liquid or a gel or a paste.

According to an embodiment, the solid pesticidal composition can include powder, granules, dust. According to an embodiment, the pesticidal composition can be in the form of powder including wettable powder, and dispersible powder. According to an embodiment, the pesticidal composition can be in the form of granules including broadcast granule or water disintegrable granule or spheronised granule, pellets, water dispersible granules. According to an embodiment, the pesticidal composition preferably is in the form of water dispersible granules, wettable powder, broadcast granule or water disintegrable granule or spheronised granule.

According to an embodiment, the liquid pesticidal composition can includes suspension, emulsion, liquid suspension, flowable concentrate, emulsifiable concentrate, seed dressing, suspo-emulsion, emulsions in water. According to an embodiment, the liquid pesticidal composition preferably includes liquid suspension or suspension concentrate, flowable concentrates.

According to an embodiment, the particle size of the pesticidal composition is in the range of 0.1 micron to 50 microns. According to further embodiment, the particle size of the pesticidal composition is in the range of 0.1 micron to 40 microns. According to further embodiment, the particle size of the pesticidal composition is in the range of 0.1 micron to 30 microns. According to further embodiment, the particle size of the pesticidal composition is in the range of 0.1 micron to 25 microns. According to further embodiment, the particle size of the pesticidal composition is in the range of 0.1 micron to 20 microns. According to further embodiment, the particle size of the pesticidal composition is in the range of 0.1 micron to 15 microns. According to further embodiment, the particle size of the pesticidal composition is in the range of 0.1 micron to 10 microns.

According to an embodiment, the pesticidal composition in the form of spheronised granules or broadcast granules or water disintegrable granules, wherein the granules are in the size range of 0.1 to 6 mm. According to an embodiment, the granules are in the size range of 0.1 to 5 mm. According to an embodiment, the granules are in the size range 0.1 to 4 mm. According to an embodiment, the granules are in the size range 0.1 to 3 mm. According to an embodiment, the granules are in the size range 0.1 to 2.5 mm.

According to an embodiment, the pesticidal composition is in the form of water dispersible granules, wherein the granules are in the size range of 0.1 to 2.5 mm. According to a further embodiment, the granules are in the size range of 0.1 to 2.0mm. According to an embodiment, the granules are in the size range of 0.1 to 1.5mm. According to an embodiment, the granules are in the size range of 0.1 to 1 mm. According to an embodiment, the granules are in the size range of 0.1 to 0.5 mm.

According to an embodiment, the granules disperse into particles in the size range of 0.1 micron to 50 microns. According to an embodiment, the granules disperse into particles in the size range of 0.1 micron to 40 microns. According to an embodiment, the granules disperse into particles in the size range of 0.1 micron to 30 microns. According to an embodiment, the granules disperse into particles in the size range of 0.1 micron to 25 microns. According to an embodiment, the granules disperse into particles in the size range of 0.1 micron to 20 microns.

According to an embodiment, the granules disperse into particles in the size range of 0.1 micron to 15 microns. According to an embodiment, the granules disperse into particles in the size range of 0.1 micron to 10 microns.

According to an embodiment, the pesticidal composition comprises at least one agrochemically acceptable excipient. According to further embodiment, the agrochemically acceptable excipient comprises at least one of surfactants, binders or binding agents, wetting agent, emulsifiers, disintegrating agents, fillers or carriers or diluents, coating agents, buffers or pH adjusters or neutralizing agents, antifoaming agents or defoamers, penetrants, ultraviolet absorbents, UV ray scattering agents, stabilizers, pigments, colorants, structuring agents, chelating or complexing or sesquitering agents, thickeners, suspending agents or suspension aid agents or anticaking agents or anti-settling agents, viscosity modifiers or rheology modifiers, tackifiers, humectants, sticking agents, anti-freezing agent or freeze point depressants, solvents include water immiscible solvents or water miscible solvents; and mixtures thereof. However, those skilled in the art will appreciate that it is possible to utilize additional agrochemically acceptable excipients without departing from the scope of the present invention.

According to an embodiment, the pesticidal composition in the form of water dispersible or spheronised granules further comprises at least one agrochemical excipient which includes disintegrating agent, surfactant, binders or fillers or carriers or diluent, antifoaming agent, ultraviolet absorbents, UV ray scattering agents, anticaking agent or antisettling or suspension aid or suspending agent, penetrating agent, sticking agent, tackifier, pigments, colorants, stabilizers. However, those skilled in the art will appreciate that it is possible to utilize additional agrochemically acceptable excipients without departing from the scope of the present invention.

According to an embodiment, the liquid pesticidal composition further comprises at least one agrochemical excipient which includes at least one structuring agent, surfactant, humectants, solvents, suspending agents or suspension aid or anticaking agent or antisettling, penetrating agent, sticking agents, ultraviolet absorbents, UV ray scattering agents, buffer or pH adjuster or neutralizing agent, stabilizer, antifreezing agent or freeze point depressants, antifoaming agents,. However, those skilled in the art will appreciate that it is possible to utilize additional agrochemically acceptable excipients without departing from the scope of the present invention.

According to an embodiment, the agrochemically acceptable excipient is present in the range of from 5% w/w to 99% w/w of the total composition. According to an embodiment, the agrochemically acceptable excipient is present in the range of from 10% w/w to 99% w/w of the total composition. According to an embodiment, the agrochemically acceptable excipient is present in the range of from 5% w/w to 90% w/w of the total composition. According to an embodiment, the agrochemically acceptable excipient is present in the range of from 5% w/w to 80% w/w of the total composition. According to an embodiment, the agrochemically acceptable excipient is present in the range of from 5% w/w to 70% w/w of the total composition. According to an embodiment, the agrochemically acceptable excipient is present in the range of from 5% w/w to 60% w/w of the total composition. According to an embodiment, the agrochemically acceptable excipient is present in the range of from 5% w/w to 50% w/w of the total composition. According to an embodiment, the agrochemically acceptable excipient is present in the range of from 5% w/w to 40% w/w of the total composition. According to an embodiment, the agrochemically acceptable excipient is present in the range of from 5% w/w to 30% w/w of the total composition.

According to an embodiment, the surfactants which are used in the pesticidal composition include one or more of anionic, cationic, non-ionic, amphoteric and polymeric surfactants. According to an embodiment, the surfactants include one or more of emulsifiers, wetting agents and dispersing agents.

The anionic surfactants include one or more of, but not limited to a salt of fatty acid, a benzoate, a polycarboxylate, a salt of alkylsulfuric acid ester, alkyl ether sulfates, an alkyl sulfate, an alkylaryl sulfate, an alkyl diglycol ether sulfate, a salt of alcohol sulfuric acid ester, an alkyl sulfonate, an alkylaryl sulfonate, a lignin sulfonate, an alkyldiphenyletherdisulfonate, a polystyrene sulfonate, a salt of alkylphosphoric acid ester, an alkylaryl phosphate, styrylaryl hydroxyl phosphate or their derivatives, a styrylaryl phosphate, docusates, a salt of polyoxyethylene alkyl ether sulfuric acid ester, a polyoxyethylenealkylaryl ether sulfate, alkyl sarcosinates, alpha olefin sulfonate sodium salt, alkyl benzene sulfonate or its salts, sodium lauroylsarcosinate, sulfosuccinates, polyacrylates, salts of polyacrylates, salt of polyoxyethylenealkylaryl ether sulfuric acid ester, a polyoxyethylene alkyl ether phosphate, a salt of polyoxyethylenealkylaryl phosphoric acid ester, sulfosuccinates -mono and other diesters, phosphate esters, alkyl naphthalene sulfonates such as isopropyl and butyl derivatives, alkyl ether sulfates -sodium and ammonium salts; alkyl aryl ether phosphates, a salt of polyoxyethylene aryl ether phosphoric acid ester, mono-alkyl sulphosuccinates, aromatic hydrocarbon sulphonates, 2-acrylamido-2-methylpropane sulfonic acid, ammonium lauryl sulfate, ammonium perfluorononanoate, Disodium cocoamphodiacetate, Magnesium laureth sulfate, Perfluorobutanesulfonic acid, Perfluorononanoic acid, carboxylates, Perfluorooctanesulfonic acid, Perfluorooctanoic acid, Phospholipid, Potassium lauryl sulfate, Soap, Soap substitute, Sodium alkyl sulfate, Sodium dodecyl sulfate, Sodium dodecylbenzenesulfonate, Sodium laurate, Sodium laureth sulfate, Sodium lauroylsarcosinate, Sodium myreth sulfate, Sodium nonanoyloxybenzenesulfonate, Sodium pareth sulfate, alkyl carboxylates, Sodium stearate, alpha olefin sulphonates, naphthalene sulfonate salts, alkyl naphthalene sulfonate fatty acid salts, naphthalene sulfonate condensates-sodium salt, fluoro carboxylate, fatty alcohol sulphates, alkyl naphthalene sulfonate condensates-sodium salt, a naphthalene sulfonic acid condensed with formaldehyde or a salt of alkylnaphthalene sulfonic acid condensed with formaldehyde; or salts, derivatives thereof.

Cationic surfactants include one or more of, but not limited to Dialkyl dimethyl ammonium chlorides, Alkyl methyl ethoxylated ammonium chlorides or salts, Dodecyl-, Coco-, Hexadecyl-, Octadecyl-, Octadecyl/Behenyl-, Behenyl-, Cocoamidopropyl-,Trimethyl Ammonium Chloride; Coco-, Stearyl-, bis(2-hydroxyethyl)Methyl Ammonium Chloride, Benzalkonium Chloride, Alkyl-, Tetradecyl-, Octadecyl-Dimethyl Benzyl Ammonium Chloride, Dioctyl-, Di(Octyl-Decyl)-, Didecyl-, Dihexadecyl-Distearyl-, Di(Hydrogenated Tallow)-Dimethyl Ammonium Chloride, Di(Hydrogenated Tallow) Benzyl-, Trioctyl-, Tri(Octyl-Decyl)-, Tridodecyl-, Trihexadecyl-Methyl Ammonium Chloride, Dodecyl Trimethyl-, Dodecyl Dimethyl Benzyl-, Di-(Octyl-Decyl) Dimethyl, Didecyl Dimethyl-Ammonium Bromide, quaternised amine ethoxylates, Behentrimonium chloride, Benzalkonium chloride, Benzethonium chloride, Benzododecinium bromide, Bronidox, quaternary ammonium salts Carbethopendecinium bromide, Cetalkonium chloride, Cetrimonium bromide, Cetrimonium chloride, Cetylpyridinium chloride, Didecyldimethylammonium chloride, Dimethyldioctadecylammonium bromide, Dimethyldioctadecylammonium chloride, Domiphen bromide, Lauryl methyl gluceth-10 hydroxypropyldimonium chloride, Octenidinedihydrochloride, Olaflur, N-Oleyl-1, 3-propanediamine, Pahutoxin, Stearalkonium chloride, Tetramethylammonium hydroxide, Thonzonium bromide; salts or derivatives therof.

The non-ionic surfactants include one or more of but not limited to polyol esters, polyol fatty acid esters, polyethoxylated esters, polyethoxylated alcohols, ethoxylated and propoxylated fatty alcohols, ethoxylated and propoxylated alcohols, EO/PO copolymers; EO and PO block copolymers, di, tri-block copolymers; block copolymers of polyethylene glycol and polypropylene glycol, poloxamers, polysorbates, alkyl polysaccharides such as alkyl polyglycosides and blends thereof, amine ethoxylates, sorbitan fatty acid ester, glycol and glycerol esters, glucosidyl alkyl ethers, polyoxyethylene glycol, sorbitan alkyl esters, sorbitan derivatives, fatty acid esters of sorbitan (Spans) and their ethoxylated derivatives (Tweens), and sucrose esters of fatty acids, Cetostearyl alcohol, Cetyl alcohol, Decyl glucoside, Decylpolyglucose, Glycerol monostearate, Lauryl glucoside, Maltosides, Monolaurin, Narrow-range ethoxylate, Nonidet P-40, Nonoxynol-9, Nonoxynols, Octaethylene glycol monododecyl ether, N-Octyl beta-D-thioglucopyranoside, Octyl glucoside, Oleyl alcohol, PEG-10 sunflower glycerides, Pentaethylene glycol monododecyl ether, Polidocanol, Poloxamer, Poloxamer 407, Polyethoxylated tallow amine, Polyglycerol polyricinoleate, Polysorbate, Polysorbate 20, Polysorbate 80, Sorbitan derivatives, Sorbitan monolaurate, Sorbitanmonostearate, Sorbitantristearate, Stearyl alcohol, glyceryl laureate, lauryl glucoside, nonylphenolpolyethoxyethanols, nonyl phenol polyglycol ether, castor oil ethoxylate, polyglycol ethers, polyadducts of ethylene oxide and propylene oxide, block copolymer of polyalkylene glycol ether and hydroxystearic acid, tributylphenoxypolyethoxy ethanol, octylphenoxypolyethoxy ethanol, etho-propoxylatedtristyrlphenols, ethoxylated alcohols, polyoxy ethylene sorbitan, fatty acid polyglyceride, a fatty acid alcohol polyglycol ether, an oxyalkylene block polymer, a polyoxyethylene alkyl ether, a polyoxyethylenealkylaryl ether, a polyoxyethylenestyrylaryl ether, a polyoxyethylene glycol alkyl ether, polyethylene glycol, a polyoxyethylene fatty acid ester, a polyoxyethylenesorbitan fatty acid ester, a polyoxyethylene glycerin fatty acid ester, Alcohol ethoxylates - C6 to C16/18 alcohols, linear and branched, Alcohol alkoxylates - various hydrophobes and EO/PO contents and ratios, Fatty acid esters - mono and diesters; lauric, stearic and oleic; Glycerol esters - with and without EO; lauric, stearic, cocoa and tall oil derived, Ethoxylated glycerine, Sorbitan esters - with and without EO; lauric, stearic and oleic based; mono and triesters, Castor oil ethoxylates - 5 to 200 moles EO; non-hydrogenated and hydrogenated, Block polymers, Amine oxides- ethoxylated and non-ethoxylated; alkyl dimethyl, Fatty amine ethoxylates- coco, tallow, stearyl, oleyl amines, a polyoxyethylene hydrogenated castor oil or a polyoxypropylene fatty acid ester; salts or derivatives thereof.

Amphoteric or Zwitterionic surfactants include one or more of, but not limited to one or more of betaine, coco and lauryl amidopropyl betaines, Coco Alkyl Dimethyl Amine Oxides, alkyl dimethyl betaines; C8 to C18, Alkyl dipropionates -sodium lauriminodipropionate, Cocoamidopropylhydroxysulfobetaine, imidazolines, phospholipids phosphatidylserine, phosphatidylethanolamine, phosphatidylcholine, and sphingomyelins, Lauryl Dimethylamine Oxide, alkyl amphoacetates and proprionates, alkyl Ampho(di)acetates, and diproprionates, lecithin and ethanolamine fatty amides; or salts, derivatives thereof.

Surfactants that are commercially available under the trademark but are not limited to one or more of Atlas G5000, TERMUL 5429, TERMUL 2510, ECOTERIC®, EULSOGEN® 118, Genapol®X, Genapol®OX -080, Genapol® C 100, Emulsogen ® EL 200, Arlacel P135, Hypermer 8261, Hypermer B239, Hypermer B261, Hypermer B246sf, Solutol HS 15, Promulgen™ D, Soprophor 7961P, Soprophor TSP/461, Soprophor TSP/724, Croduret 40, Etocas 200, Etocas 29, Rokacet R26, Cetomacrogol 1000, CHEMONIC OE-20, Triton N-101, Triton X-100, Tween 20, 40, 60, 65, 80, Span20, 40, 60, 80, 83, 85, 120, Brij®, Atlox 4912, Atlas G5000, TERMUL 3512, TERMUL 3015, TERMUL 5429, TERMUL 2510, ECOTERIC®, ECOTERIC® T85, ECOTERIC® T20, TERIC 12A4, EULSOGEN® 118, Genapol®X, Genapol®OX -080, Genapol® C 100, Emulsogen ® EL 200, Arlacel P135, Hypermer 8261, Hypermer B239, Hypermer B261, Hypermer B246sf, Solutol HS 15, Promulgen™ D, Soprophor 7961P, Soprophor TSP/461, Soprophor TSP/724, Croduret 40, Etocas 200, Etocas 29, Rokacet R26, CHEMONIC OE-20, Triton™ N-101, IGEPAL CA-630 and Isoceteth-20.

However, those skilled in the art will appreciate that it is possible to utilize other conventionally known surfactants without departing from the scope of the present invention. The surfactants are commercially manufactured and available through various companies.

According to an embodiment, the surfactant is present in an amount of 0.1% to 60% w/w of the total composition. According to an embodiment, the surfactant is present in an amount of 0.1% to 40% w/w of the total composition. According to an embodiment; the surfactant is present in an amount of 0.1% to 30% w/w of the total composition. According to a further embodiment, the surfactant is present in an amount of 0.1% to 20% w/w of the total composition. According to an embodiment, the surfactant is present in an amount of 0.1% to 10% w/w of the total composition.

According to an embodiment, the dispersing agents which are used in the pesticidal composition includes, but not limited to one or more of polyvinyl alcohol, phenol naphthalene sulphonates, lignin sulphonates, lignin derivatives, dibutylnaphthalene- sulfonic acid, alkylarylsulfonates, alkyl sulfates, alkylsulfonates, fatty alcohol sulfates, fatty acids and sulfated fatty alcohol glycol ethers, polyoxyethylene alkyl ethers,dioctyl sulfosuccinate, lauryl sulfate, polyoxyethylenestyryl phenyl ether sulfate ester salts and the like, alkali metal salts thereof, ammonium salts or amine salts, polyoxyethylenestyryl phenyl ether, polyoxyethylenesorbitan alkyl esters, and the like, mixture of sodium salt of naphthalene sulphonic acid urea formaldehyde condensate and sodium salt of phenol sulphonic formaldehyde condensate ethoxylated alkyl phenols, ethoxylated fatty acids, alkoxylated linear alcohols, polyaromatic sulfonates, sodium alkyl aryl sulfonates, glyceryl esters, ammonium salts of maleic anhydride copolymers, phosphate esters, salts of addition products of ethylene oxide and fatty acid esters, polycarboxylates, sodium salts of condensed phenolsulfonic acid as well as the napthalene sulfonate-formaldehyde condensates, sodium naphthalene sulfonate formaldehyde condensates, ammonium salts of sulfonated naphthalene, salts of polyacrylic acids, tristyrylphenolethoxylate phosphate esters; aliphatic alcohol ethoxylates; alkyl ethoxylates; EO-PO block copolymers; graft copolymers, ammonium salts of sulfonated naphthalene, salts of polyacrylic acids, salts, derivatives thereof, Poly methyl methacrylate / Acrylic Graft copolymer and its derivatives, Nonyl-phenol ethoxylates and its derivatives, Castor oil based ethoxylates, sorbitan ester ethoxylates, Lanolin alcohol ethoxylates, Polyol ethoxylates, Phosphate esters and its derivatives, stearic fatty acids and its derivatives, oleic fatty acids, vegetable fatty acids, tallow fatty acids ethoxylates,

Commercially available dispersing agents include "Morwet D425" (sodium naphthalene formaldehyde condensate ex Nouryon Corporation, USA) "Morwet EFW" Sulfated Alkyl Carboxylate and Alkyl Naphthalene Sulfonate-- Sodium Salt "Tamol PP" (sodium salt of a phenolsulphonic acid condensate) "Reax 80N" (sodium lignosulphonate) "Wettol D1" sodium alkylnaphthalene sulphonate (ex BASF). However, those skilled in the art will appreciate that it is possible to utilize other conventionally known dispersants without departing from the scope of the present invention. The dispersing agents are commercially manufactured and available through various companies.

According to an embodiment, the dispersing agent is present in an amount of 0.1-60% w/w of the total composition. According to an embodiment, the dispersing agent is present in an amount of 0.1-30% w/w of the total composition. According to an embodiment, the dispersing agent is present in an amount of 3-20% w/w of the total composition.

According to an embodiment the wetting agents used in the pesticidal composition include, but not limited to one or more of phenol naphthalene sulphonates, alkyl naphthalene sulfonate and their salts, sodium alkyl naphthalene sulfonate, sodium salt of sulfonated alkylcarboxylate, polyoxyalkylated ethyl phenols, polyoxyethoxylated fatty alcohols, polyoxyethoxylated fatty amines, lignin derivatives, alkane sulfonates or their salts, alkylbenzene sulfonates, salts of polycarboxylic acids, salts of esters of sulfosuccinic acid, alkylpolyglycol ether sulfonates, alkyl ether phosphates, alkyl ether sulphates and alkyl sulfosuccinic monoesters, Alkyl polyglucoside, Alkyl polysaccharide, or their salts or derivatives thereof. However, those skilled in the art will appreciate that it is possible to utilize other conventionally known wetting agents without departing from the scope of the present invention. The wetting agents are commercially manufactured and available through various companies.

According to an embodiment, the wetting agent is present in an amount of 0.1%-60% w/w of the total composition. According to an embodiment, the wetting agent is present in an amount of 0.1%-40% w/w of the total composition. According to an embodiment, the wetting agent is present in an amount of 0.1%-30% w/w of the total composition.

According to an embodiment the emulsifiers used in the pesticidal composition include, but not limited to one or more of, alkylated benzene sulphonates, ethoxylated or alkoxylated tristyrylphenols, alkoxylated coplymers, fatty alcohol ethoxylates, fatty acid derivatives, sorbitol derivatives, castor oil ethoxylates and derivatives, ethoxylated phenols, ethoxylated alkylphenols, nonylphenol alkoxylates, alcohol alkoxylates, sulphosuccinates, alkyletherphosphates, alkoxylated fatty alcohol phosphates (e.g. PEG 10 PPG 5 Cetyl phosphate), polyvinyl alcohol, PVP, lignin sulfonate, Poly acrylates,polysorbates, polycarboxylates, alcohol ethoxylates, salt of alkyl aryl sulphonates derivative thereof. However, those skilled in the art will appreciate that it is possible to utilize other conventionally known wetting agents without departing from the scope of the present invention. The emulsifiers are commercially manufactured and available through various companies.

Emulsifiers which are used in the pesticidal composition include but are not limited one or more of Atlas G5000, TERMUL 5429, TERMUL 2510, ECOTERIC®, EMULSOGEN® 118, Genapol®X, Genapol®OX -080, Genapol® C 100, Emulsogen ® EL 200, Arlacel P135, Hypermer 8261, Hypermer B239, Hypermer B261, Hypermer B246sf, Solutol HS 15, Promulgen™ D, Soprophor 7961P, Soprophor TSP/461, Soprophor TSP/724, Croduret 40, Etocas 200, Etocas 29, Rokacet R26, CHEMONIC OE-20, Triton™ N-101, Tween 20, 40, 60, 65, 80, Span20, 40, 60, 80, 83, 85, 120, Brij®, Triton™ Atlox 4912, Atlas G5000, TERMUL 3512, TERMUL 3015, TERMUL 5429, TERMUL 2510, ECOTERIC®, ECOTERIC® T85, ECOTERIC® T20, TERIC 12A4, EULSOGEN® 118, Genapol®X, Genapol®OX -080, Genapol® C 100, Emulsogen ® EL 200, Arlacel P135, Hypermer 8261, Hypermer B239, Hypermer B261, Hypermer B246sf, Solutol HS 15, Promulgen™ D, Soprophor 7961P, Soprophor TSP/461, Soprophor TSP/724, Croduret 40, Etocas 200, Etocas 29, Rokacet R26, CHEMONIC OE-20, Triton™ N-101, Tween 20, 40, 60, 65, 80 and Span 20, 40, 60, 80, 83, 85, 120 can also be used. However, those skilled in the art will appreciate that it is possible to utilize other conventionally known emulsifiers without departing from the scope of the present invention. The emulsifiers are commercially manufactured and available through various companies.

According to an embodiment, the emulsifier is present in an amount of 0.1%-60% w/w of the total composition. According to an embodiment, the emulsifier is present in an amount of 0.1%-50% w/w of the total composition. According to an embodiment, the emulsifier is present in an amount of 0.1%-30% w/w of the total composition.

According to an embodiment, the solvents used in the pesticidal composition include water miscible solvents or water immiscible solvents.

The water miscible solvents include, but are not limited to Ethylene glycol, Glycerol, N-Methyl-2-pyrrolidone, 1,3-Propanediol, 1,5-Pentanediol, Propylene glycol, Triethylene glycol, 1,2-Butanediol, 1,3-Butanediol, 1,4-Butanediol, Dimethylformamide, Decainamide, Dimethoxyethane, Dimethyloctanamide, Dimethyldecanamide, Water, Propylene glycol, monoethylene glycol, poly ethylene glycol ether and its derivatives, glycerol, Sorbitol, Dimethyloctanamide, Dimethyldecanamide, Dimethyloctadecanamide, Monobutyl ether, in general glycols and glycol ethers, alkylene carbonates, n-methyl pyrrolidone, Dimethylformamide, Acetophenone, Cyclohexanone, dimethyl sulfoxide. However, those skilled in the art will appreciate that it is possible to utilize other water miscible solvents without departing from the scope of the present invention.

According to an embodiment, the solvent is present in an amount of 0.1-95% w/w of the total composition. According to an embodiment, the solvent is present in an amount of 0.1-60% w/w of the total composition. According to an embodiment, the solvent is present in an amount of 0.1-40% w/w of the total composition. According to an embodiment, the solvent is present in an amount of 0.1-30% w/w of the total composition.

According to an embodiment, the disintegrating agents which are used in the pesticidal composition include, but not limited to one or more of inorganic water soluble salts of sodium, potassium, magnesium, ammonium, nitrate, acetate e.g. sodium chloride, potassium chloride, potassium nitrate; water insoluble organic compounds such as microcrystalline cellulose, cross-linked sodium carboxymethyl cellulose, carboxymethyl calcium, cellulose powder; sodium tripolyphosphate, sodium hexametaphosphate, metal stearates, dextrin, methacrylate copolymer, Polyplasdone® XL-10 (cross-linked polyvinylpyrrolidone), polyaminocarboxylic acid, sulfonated styrene-isobutylene-maleic anhydride copolymer, salts of polyacrylates or methacrylates, starchpolyacrylonitrile graft copolymer, sodium or potassium bicarbonates/carbonates or their mixtures or salts with acids such as citric and fumaric acid, or salts, phenol naphthalene sulphonates, alkyl naphthalene sulfonate, sodium alkyl naphthalene sulfonate, sodium salt of sulfonated alkylcarboxylate, polyoxyalkylated ethyl phenols, polyoxyethoxylated fatty alcohols, polyoxyethoxylated fatty amines, lignin derivatives, alkane sulfonates, alkylbenzene sulfonates, salts of polycarboxylic acids, salts of esters of sulfosuccinic acid, alkylpolyglycol ether sulfonates, alkyl ether phosphates, alkyl ether sulphates and alkyl sulfosuccinic monoesters, lignosulphonates, salts derivatives thereof. However, those skilled in the art will appreciate that it is possible to utilize different disintegrating agents without departing from the scope of the present invention. The disintegrating agents are commercially manufactured and available through various companies.

According to an embodiment, the disintegrating agent is present in an amount of 0.1% to 50% w/w of the composition. According to an embodiment, the disintegrating agent is present in an amount of 0.1% to 30% w/w of the composition. According to an embodiment, the disintegrating agent is present in an amount of 0.1% to 20% w/w of the composition. According to an embodiment, the disintegrating agent is present in an amount of 0.1% to 10% w/w of the composition.

According to an embodiment, the binding agents or binders which are used in the pesticidal composition , but not limited to one or more of polyvinylalcohol, lactose, polyvinylyrrolidone, water soluble cellulose derivatives such as carboxymethyl cellulose, methyl cellulose, Starch, dextrins, lignin sulphonates and bentonite, carbohydrates such as monosaccharides, disaccharides, oligo saccharides and polysaccharides, clays, kaolins, attapulgite, xanthan gum, guar gum, Carrageenan, poly acrylates, poly carboxylates, carbomers, derivatives and combinations thereof. However, those skilled in the art will appreciate that it is possible to utilize different binding agents without departing from the scope of the present invention. The binding agents are commercially manufactured and available through various companies.

According to an embodiment, the binding agent is present in an amount of 0.1% to 50% w/w of the composition. According to further embodiment, the binding agent is present in an amount of 0.1% to 30% w/w of the composition. According to further embodiment, the binding agent is present in an amount of 0.1% to 20% w/w of the composition. According to further embodiment, the binding agent is present in an amount of 0.1% to 10% w/w of the composition.

According to an embodiment, the carriers which are used in the pesticidal composition include, but are not limited to one or more of solid carriers or fillers or diluents. According to another embodiment, the carriers include mineral carriers, plant carriers, synthetic carriers, water-soluble carriers. However, those skilled in the art will appreciate that it is possible to utilize different carriers without departing from the scope of the present invention. The carriers are commercially manufactured and available through various companies.

The solid carriers include natural minerals like clay such as bentonite, china clay, acid clay, dolomite, kaolin such as kaolinite, dickite, nacrite, and halloysite, synthetic and diatomaceous silicas, montmorillonite minerals such as sodium montmorillonite, smectites, such as saponite, hectorite, sauconite, and hyderite, micas, such as pyrophyllite, talc, agalmatolite, muscovite, phengite, sericite, and illite, silicas such as cristobalite, attapulgite, sepiolite; vermiculite, laponite, pumice, perlite, volclay, vermiculites, limestone, natural and synthetic silicates, charcoal, silica, powdered silica, fused silica, hydrophobic silica, wet process silicas, dry process silicas, calcined products of wet process silicas, surfacemodified silicas, mica, zeolite, diatomaceous earth, derivatives thereof;. fly ash, chalks (Omya ®), fuller's earth, loess, mirabilite, white carbon, slaked lime, synthetic silicic acid, starch, modified starch (Pineflow, available from Matsutani Chemical industry Co., Ltd.), sucrose, potassium pyrophosphate, sodium tripolyphosphate, kaolin 1777, Lactose, maltodextrin, dextrin, sorbitol; salts of lignin sulphonates such as ammonium, sodium, calcium, zinc. Water insoluble carriers include, but not limited to clays, microcrystalline cellulose, perlite, volcanic ash, mica, calcium or magnesium carbonates, diatomaceous earth, soap stone, starch, hydrophobically or hydrophilically modified starch, calcium phosphates. Water soluble salts such as, citrate, nitrate, sulphate, hexametaphosphate, phosphate, Ammonium salts such as sulphate, phosphate, magnesium sulphate. However, those skilled in the art will appreciate that it is possible to utilize different solid carriers without departing from the scope of the present invention. The solid carriers are commercially manufactured and available through various companies.

According to an embodiment, the carrier is present in an amount of 0.1% to 98% w/w of the composition. According to further embodiment, the carrier is present in an amount of 0.1% to 80% w/w of the composition. According to further embodiment, the carrier is present in an amount of 0.1% to 60% w/w of the composition. According to further embodiment, the carrier is present in an amount of 0.1% to 40% w/w of the composition. According to further embodiment, the carrier is present in an amount of 0.1% to 20% w/w of the composition.

According to an embodiment, the anticaking agents which are used in the pesticidal composition include, but are not limited to one or more of precipitated Silica, fumed silica, hydrophobically modified silica, Perlite, Mica, Talc, soapstone, Magnesium Aluminum silicate, clays, Calcium silicate, sodium bicarbonate, Magnesium trisilicate, fumed silica (white carbon), ester gum, a petroleum resin, Foammaster® Soap L sodium stearate, sodium metasilicate, sodium carbonate, Sodium alumino silicates, calcium carbonate and magnesium carbonate, Magnesium stearate, calcium phosphate salts or derivatives thereof. However, those skilled in the art will appreciate that it is possible to utilize different anti caking agents without departing from the scope of the present invention. The anti-caking agents are commercially manufactured and available through various companies.

According to an embodiment, the antifoaming agents or defoamers which are used in the pesticidal composition include, but not limited to one or more of silica, siloxane, silicone dioxide, polydimethyl siloxane and its derivatives, vegetable oils, petroleum oils, paraffin oil, polyethylene glycol, Silicone oils and magnesium stearate or derivatives thereof. Preferred antifoaming agents include silicone emulsions (such as, e.g., Silikon® SRE, Wacker or Rhodorsil® from Rhodia), long-chain alcohols, fatty acids. Non silicone defoamers can also be used. However, those skilled in the art will appreciate that it is possible to utilize other conventionally known antifoaming agents without departing from the scope of the present invention. The antifoaming agents are commercially manufactured and available through various companies.

According to an embodiment, the anti-foaming agent is present in an amount of 0.01% to 20% w/w of the total composition. According to an embodiment, the anti-foaming agent is present in an amount of 0.01% to 10% w/w of the total composition. According to an embodiment, the anti-foaming agent is present in an amount of 0.01% to 5% w/w of the total composition. According to an embodiment, the anti-foaming agent is present in an amount of 0.01% to 1% w/w of the total composition.

According to an embodiment, the pH-adjusters or buffers or neutralizing agents which are used in the pesticidal composition include both acids and bases of the organic or inorganic type and mixtures thereof. According to further embodiment, pH-adjusters or buffers or neutralizing agents include, but not limited to one or more of organic acids, inorganic acids and alkali metal compounds or salts, derivatives thereof. According to an embodiment, the organic acids include, but not limited to one or more of acetic, propionic, citric, oxalic, malic, adipic, fumaric, maleic, succinic, tartaric acid, hydrochloric acid, nitric acid, sulphuric acid, phosphoric acid, boric acid, phytic acid or salts, derivatives thereof; and the mono-, di-, or tribasic salts of these acids or derivatives thereof. Alkali metal compounds include, but not limited to one or more of hydroxides of alkali metals such as sodium hydroxide and potassium hydroxide, carbonates of alkali metals such as sodium carbonate, hydrogencarbonates of alkali metals such as sodium hydrogencarbonate and alkali metal phosphates such as sodium phosphate, sodium dihydrogen phosphate; sodium hydroxide, potassium hydroxide, ammonium hydroxide, Borax, sodium borate; calcium carbonate, calcium hydroxide, ferrous hydroxide, Magnesia, Lime, potassium acetate, potassium bicarbonate, potassium carbonate, sodium acetate, sodium benzoate, sodium carbonate, sodium bicarbonate, sodium metasilicate, trisodium phosphate, ammonia, primary amines, secondary amines and tertiary amines and mixtures thereof. According to an embodiment, the salts of organic acids include, but not limited to one or more of alkali metal salts such as sodium citrate and the like. Mixtures can also be used to create a pH-adjusters or buffers or neutralizing agents. However, those skilled in the art will appreciate that it is possible to utilize other conventionally known pH-adjusters or buffers or neutralizing agents without departing from the scope of the present invention. The pH-adjusters or buffers or neutralizing agents are commercially manufactured and available through various companies.

According to an embodiment, the pH-adjusters or buffers are present in an amount of 0.01% to 20% w/w of the total composition. According to an embodiment, the pH-adjusters or buffers are present in an amount of 0.01% to 10% w/w of the total composition. According to an embodiment, the pH-adjusters or buffers are present in an amount of 0.01% to 5% w/w of the total composition. According to an embodiment, the pH-adjusters or buffers are present in an amount of 0.01% to 1% w/w of the total composition.

According to an embodiment, the spreading agents which are used in the pesticidal composition include, but not limited to one or more of silicone surfactants, copolymer of maleic acid with a styrene compound, a (meth)acrylic acid copolymer, a half ester of a polymer consisting of polyhydric alcohol with dicarboxylic anhydride, a water-soluble salt of polystyrenesulfonic acid, fatty acids, aliphatic alcohols, vegetable oils such as cottonseed, or inorganic oils, petroleum distillates, modified trisiloxanes, polyglycol, polyethers, polyoxyalkylated ethyl phenols, polyoxyethoxylated fatty alcohols, polyoxyethoxylated fatty amines, alkylpolyglycol ether sulfonates, alkyl ether phosphates, Alkyl polyglucoside, Alkyl polysaccharide, vegetable oil, mineral oils, petroleum oils, silicone oils, siloxanes, polyoxyalkylene alkyl ethers, polyoxyalkylene alkylphenyl ethers, polyoxyalkylene polyhydric alcohol fatty acid esters, polyhydric alcohol fatty acid esters, polyoxyalkylene alkylamines, alkyl polyglycosides and glycidyl ethers are preferable. Examples of polyhydric alcohols constituting a nonionic surfactant include divalent alcohols such as ethyleneglycol, 1,2-propyleneglycol, 1,3-propyleneglycol, 1,4-butanediol, 2,3-butanediol, 1,5-pentanediol, 1,6-hexanediol, 1,8-octanediol, neopentyl glycol or 2-methyl-1,3-propanediol, trivalent alcohols such as glycerol, clathrates or salts or derivatives thereof. However, those skilled in the art will appreciate that it is possible to utilize other conventionally known spreading agents without departing from the scope of the present invention. The spreading agents are commercially manufactured and available through various companies.

According to an embodiment, the spreading agent is present in an amount of 0.1% to 20% w/w of the total composition. According to an embodiment, the spreading agent is present in an amount of 0.1% to 10% w/w of the total composition. According to an embodiment, the spreading agent is present in an amount of 0.1% to 5% w/w of the total composition. According to an embodiment, the spreading agent is present in an amount of 0.1% to 1% w/w of the total composition.

According to an embodiment, the sticking agents which are used in the pesticidal composition include, but not limited to one or more of, silicone-based surfactants, mineral oils, vegetable oils, petroleum oil, silicone oils, emulsifiers, fish oil or fatty acid soaps or emulsified vegetable oil. Carboxymethylcellulose and natural and synthetic polymers such as gum arabic, xanthan gum, guar gum, carrageenan, carbomer, polyvinyl alcohol, polyvinyl pyrrolidone and polyvinyl acetate, lecithins, carboxymethyl cellulose, natural and synthetic polymers, paraffin, a polyamide resin, polyacrylate, polyoxyethylene, wax, polyvinyl alkyl ether, an alkylphenol-formalin condensate, fatty acids, aliphatic alcohols, vegetable oils such as cottonseed, or inorganic oils, petroleum distillates, modified trisiloxanes, polyglycol, polyethers, clathrates, a synthetic resin emulsion or salts or derivatives thereof. However, those skilled in the art will appreciate that it is possible to utilize other conventionally known sticking agents without departing from the scope of the present invention. The sticking agents are commercially manufactured and available through various companies. According to an embodiment, the sticking agent can be present in an amount of 0.1% to 30% w/w of the total composition.

According to an embodiment, the sticking agent is present in an amount of 0.1% to 20% w/w of the total composition. According to an embodiment, the sticking agent is present in an amount of 0.1% to 10% w/w of the total composition.

According to an embodiment, the stabilizers which are used in the pesticidal composition include, but not limited to alkyl glyoxylates such as ethyl glyoxylate, zeolite, EDTA and chelating agents, sequestering agents, antioxidants such as sodium bisulphite, sodium metabisulphite, ascorbic acid, citric acid, malic acid and their salts; phenol compounds, and the like; ultraviolet absorbers such as benzophenone compounds or derivatives thereof. However, those skilled in the art will appreciate that it is possible to utilize other conventionally known stabilizers without departing from the scope of the present invention. The stabilizers are commercially manufactured and available through various companies.

According to an embodiment, the stabilizer is present in an amount of 0.1% to 30% w/w of the total composition. According to an embodiment, the stabilizer is present in an amount of 0.1% to 20% w/w of the total composition. According to an embodiment, the stabilizer is present in an amount of 0.1% to 10% w/w of the total composition.

According to an embodiment, the preservatives which are used in the pesticidal composition include but not limited to, one or more of bactericides, anti-fungal agents, biocides, anti-microbial agents, and antioxidant. Non limiting examples of preservatives include one or more of paraben, its esters and salts, propionic acid and its salts, 2,4-hexadienoic acid (sorbic acid) and its salt, formaldehyde and paraformaldehyde, 2-hydroxybiphenyl ether and its salts, inorganic sulfites and bisulfites, sodium iodate, chlorobutanol, 1,6-bis(4-amidino-2-bromophenoxy)-n-hexane and its salts, 5-amino-1,3-bis(2-ethylhexyl)-5-methylhexahydropyrimidine, 5-bromo-5-nitro-1,3-dioxane, 2-bromo-2-nitropropane-1,3-diol, 2,4-dichlorobenzyl alcohol, 5-chloro-2-(2,4-dichlorobenzylalcohol), N-(4-chlorophenyl)-N'-(3,4-dichlorophenyl) urea, 4-chloro-m-cresol, 2,4,4'-trichloro-2'-hydroxy diphenyl ether, 4-chloro-3,5-dimethyl phenol, 1,1'-methylene-bis(3-(1-hydroxy methyl-2,4-dioximidazolidin-5-yl)urea), 2-phenoxyethanol, hexamethylenetetramine, 1-(3-chloroallyl)-3,5,7-triaza-1-azonia-adamantane chloride, 1-(4-chlorophenoxy)-1-(1H-imidazol-1-yl)-3,3-dimethyl-2-butanone, 1,3-bis(hydroxymethyl)-5,5-dimethyl-2,4-imidazolidinedione, benzyl alcohol, octopirox, 1,2-dibromo-2,4-dicyanobutane, 2,2'-methylenebis(6-bromo-4-chlorophenol), bromochlorophene, dichlorophene, 2-benzyl-4-chlorophenol, 2-chloroacetamide, chlorhexidine, chlorhexidine acetate, chlorhexidine gluconate, chlorhexidine hydrochloride, 1-phenoxypropan-2-ol, N-alkyl(C12-C22)trimethylammonium bromide and chloride, 4,4-dimethyl-1,3-oxazolidine, N-hydroxymethyl-N-(1,3-di(hydroxymethyl)-2,5-dioxoimidazolidin-4-yl)-N'-hydroxymethylurea, 1,6-bis(4-amidinophenoxy)-n-hexane and its salts, glutaraldehyde, 5-ethyl-1-aza-3,7-dioxabicyclo(3.3.0)octane, 3-(4-chlorophenoxy)propane-1,2-diol, Hyamine, alkyl(C8-C18)dimethylbenzyl ammonium chloride, alkyl(C8-C18)dimethylbenzylammonium bromide, alkyl(C8-C18)dimethylbenzylammonium saccharinate, benzyl hemiformal, 3-iodo-2-propynyl butylcarbamate, sodium hydroxymethylaminoacetate, cetyltrimethylammonium bromide, acetic acid, cetylpyridinium chloride, and derivatives of 2H isothiazol-3-one (so-called isothiazolone derivatives) such as alkylisothiazolones (for example 2-methyl-2H-isothiazol-3-one, MIT; chloro-2-methyl-2H-isothiazol-3-one, CIT), benzoisothiazolones (for example 1,2-benzoisothiazol-3(2H)-one, BIT, commercially available as Proxel® types from ICI) or 2-methyl-4,5-trimethylene-2H-isothiazol-3-one (MTIT), C1-C4-alkyl para-hydroxybenzoate, an dichlorophene, Proxel® from ICI or Acticide® RS from Thor Chemie and Kathon® MK from Rohm & Haas, Bacto-100, Sodium Propinoate, Sodium Benzoate, Propyl Paraben,Propyl Paraben Sodium, Potassium Sorbate, Potassium Benzoate, Phenyl Etehyl Alcohol, Sodium, Ethylparaben, Methylparaben, Butylparaben, Bezyla Alcohol, Benzothonium Chloride, Cetylpyridinium Chloride, Benzalkonium Chloride, 1,2-benzothiazol-3-one, Preventol® (Lanxess®), Butylhydroxytoluene, potassium sorbate, iodinecontaining organic compounds such as 3-bromo-2,3-diiodo-2-propenyl ethyl carbonate, 3-iodo-2-propynyl butyl carbamate, 2,3,3-triiodo allyl alcohol, and parachlorophenyl-3-iodopropargylformal; benzimidazole compounds and benzthiazole compounds such as 2-(4-thiazolyl)benzimidazole and 2-thiocyanomethylthiobenzo-thiazole; triazole compounds such as 1-(2-(2',4'-dichlorophenyl)-1,3-dioxolane-2-ylmethyl)-1H-1,2,4-triazole, 1-(2-(2',4'-dichloro phenyl)-4-propyl-1,3-dioxolane-2-ylmethyl)-1H-1,2,4-triazole, and $\alpha$-(2-(4-chlorophenyl) ethyl)-$\alpha$-(1,1-dimethyl ethyl)-1H-1,2,4-triazole-1-ethanol; and naturally occurring compounds such as 4-isopropyl tropolone (hinokitiol) and borax or salts or derivatives thereof. Antioxidants includes but not limited to one or more of sodium or potassium bisulphites, sulphites, ascorbic acid, isoascorbic acid, imidazole and imidazole derivatives (e.g. urocanic acid), 4,4'-thiobis-6-t-butyl-3-methylphenol, 2,6-di-t-butyl-p-cresol (BHT), and pentaerythrityltetrakis [3-(3,5,-di-t-butyl-4-hydroxyphenyl) propionate; amine antioxidants such as N,N'-di-2-naphthyl-p-phenylenediamine; hydroquinoline antioxidants such as 2,5-di(t-amyl)hydroquinoline; phosphorus-containing antioxidants such as triphenyl phosphatepropylthiouracil , hydroquinone and derivatives thereof (e.g. arbutin), ubiquinone and ubiquinol, and derivatives thereof, ascorbyl palmitate, stearate, di- palmitate, acetate, Mg ascorbyl phosphates, diso- diumascorbyl phosphate and sulfate, potassium ascorbyltocopheryl phosphate, isoascorbic acid and derivatives thereof, disodium rutinyldisulfate, dibutylhydroxytoluene, 4,4-thiobis-6-tert-butyl-3-methylphenol, butylhydroxy anisole, p-octylphenol, mono-(di- or tri-) methyl benzylphenol, 2,6-tert-butyl-4-methylphenol, pentaerythritol-tetrakis 3-(3,5-di-tert-butyl-4-hydroxyphenyl)propionate, butyl hydroxyl anisol, trihydroxy butyrophenone, thereof. However, those skilled in the art will appreciate that it is possible to utilize other conventionally known preservatives without departing from the scope of the present invention. The preservatives are commercially manufactured and available through various companies.

According to an embodiment, the preservative or bactericides or anti-fungal agents or biocides or anti-microbial agents or antioxidant is present in an amount of 0.1% to 20% w/w of the total composition. According to further embodiment, the preservative or bactericides or anti-fungal agents or biocides or anti-microbial agents or antioxidant is present in an amount of 0.1% to 10% w/w of the total composition. According to further embodiment, the preservative or bactericides or anti-fungal agents or biocides or anti-microbial agents or antioxidant is present in an amount of 0.1% to 5% w/w of the total composition. According to further embodiment, the preservative or bactericides or anti-fungal agents or biocides or anti-microbial agents or antioxidant is present in an amount of 0.1% to 1% w/w of the total composition.

According to an embodiment, the structuring agents which are used in the pesticidal composition include, but not limited to one or more of thickeners, viscosity modifiers, tackifiers, suspension aids, rheological modifiers or antisettling agents. A structuring agent prevents sedimentation of the active ingredient particles after prolonged storage.

According to an embodiment, the structuring agents which are used in the composition include, but not limited to one or more polymers such as polyacrylics, polyacrylamides, polysaccharides, modified cellulose derivatives, co-polymers of cellulose derivatives, carboxyvinyl or polyvinyl pyrrolidones, polyethylenes, polyethylene oxide, polyvinyl alcohol and derivatives; clays such as bentonite clays, kaolin, smectite, attapulgites, attaclays, veegum, vangel with high surface area, silica and natural gums such as guar gum, xanthan gum, gum Arabic, gum tragacanth, rhamsan gum, locust bean gum, carrageenan, welan gum, dextrin, polyacrylic acids and their sodium salts; fumed silica, mixture of fumed silica and fumed aluminium oxide, swellable polymers, swelling clay, polyamides or its derivatives; polyols such as poly(vinyl acetate), sodium polyacrylate, poly(ethylene glycol), phospholipid (for example, cephalin, and the like); stachyose, fructo-oligosaccharides, amylose, pectins, alginates, hydrocolloids and mixtures thereof. Also, celluloses such as, carboxymethylcellulose, ethylcellulose, hydroxyethylcellulose, hydroxy-methyl ethyl cellulose, hydroxyl ethyl propyl cellulose, methylhydroxyethylcellulose, methylcellulose; starches, starch acetates, starch hydroxyethyl ethers, ionic starches, long-chain alkyl starches, dextrins, maltodextrin, corn starch, amine starches, phosphates starches, and dialdehyde starches; plant starches such as corn starch and potato starch; other carbohydrates such as pectin, amylopectin, xylan, glycogen, agar, gluten, alginic acid, phycocolloids, chitosan or derivatives thereof. However, those skilled in the art will appreciate that it is possible to utilize other conventionally known structuring agents without departing from the scope of the present invention.

Preferred structuring agents include one or more of xanthan gum, aluminum silicate, methylcellulose, polysaccharide, alkaline earth metal silicate, veegum, bentonite, attapulgite, kaolin and polyvinyl alcohol. The structuring agents are commercially manufactured and available through various companies.

According to an embodiment, the structuring agent is present in an amount of 0.01% to 5% w/w of the composition. According to an embodiment, the structuring agent is present in an amount of 0.01% to 4% w/w of the composition. According to an embodiment, the structuring agent is present in an amount of 0.01% to 3% w/w of the composition. According to an embodiment, the structuring agent is present in an amount of 0.01% to 2% w/w of the composition. According to an embodiment, the structuring agent is present in an amount of 0.01% to 1% w/w of the composition. According to an embodiment, the structuring agent is present in an amount of 0.01% to 0.1% w/w of the composition.

According to an embodiment, the antifreezing agents or freezing point depressants used in the liquid supension composition include, but are not limited to one or more of polyhydric alcohols such as ethylene glycol, diethylene glycol, dipropylene glycol, propylene glycol, glycerol, monohydric or polyhydric alcohols, glycol ethers, glycol ethers, glycol monoethers such as the methyl, ethyl, propyl and butyl ether of ethylene glycol, diethylene glycol, propylene glycol and dipropylene glycol, glycol diethers such as methyl and ethyl diethers of ethylene glycol, diethylene glycol and dipropyleneglycol.or urea, glycerol, isopropanol, propylene glycol monomethyl ether, di- or tripropylene glycol monomethyl ether or carbohydrates such as glucose, mannose, fructose, galactose, sucrose, lactose, maltose, xylose, arabinose, sorbitol, mannitol, trehalose, raffinose or derivatives thereof. However, those skilled in the art will appreciate that it is possible to utilize different antifreezing agents without departing from the scope of the present invention. The antifreezing agents are commercially manufactured and available through various companies.

According to an embodiment, the chelating or complexing or sequestering agents which are used in the pesticidal composition include, but not limited to one or more of lignosulphonates, polycarboxylic acids such as polyacrylic acid and the various hydrolyzed poly(methyl vinyl ether/maleic anhydride); N-hydroxyethyliminodiacetic acid, nitrilotriacetic acid (NTA), N,N,N',N'-ethylenediaminetetraacetic acid, N-hydroxyethyl-N, N',N'-ethylenediaminetriacetic acid and N,N,N',N'',N''-diethylenetriaminepentaacetic acid; $\alpha$-hydroxy acids, such as citric acid, tartaric acid and gluconic acid; orthophosphates, such as trisodium phosphate, disodium phosphate, monosodium phosphate; condensed phosphates, such as sodium tripolyphosphate, tetrasodium pyrophosphate, sodium hexametaphosphate and sodium tetrapolyphosphate; 5-sulfo-8-hydroxyquinoline; and 3,5-disulfopyrocatechol, polycarboxylates, ethylene diamine tetraacetic acid (EDTA), diethylenetriaminepentaacetic acid (DTPA), N-hydroxyethyl-ethylenediamine-triacetic acid (HEDTA), ethylene-diaminediacetate (EDDA), ethylenediamminedi(o-hydroxyphenylacetic) acid (EDDHA), cyclohexane diamine tetraacetic acid (CDTA), polyethyleneaminepolyacetic acids, lignosulfonate, Ca-, K-, Na-, and ammonium lignosulfonates, fulvic acid, ulmic acid, citric acids, cyclodextrin, phytic acid, humic acid, pyrophosphate. However, those skilled in the art will appreciate that it is possible to utilize other chelating or complexing or sesquitering agents without departing from the scope of the present invention. The chelating or complexing or sesquitering agents are commercially manufactured and available through various companies.

According to an embodiment, the penetrant which is used in the pesticidal composition include, but not limited to one or more of alcohol, glycol, glycol ether, ester, amine, alkanolamine, amine oxide, quaternary ammonium compound, triglyceride, polyoxyethylenetrimethylolpropane hexaoleate, sorbitan monooleate, polyoxyethylene sorbitan monolaurate, polyoxyethylene trimethylolpropane trioleate, ethoxylated triglycerides, ethoxylated polyol esters, alkoxylated alkanols and also alkoxylated triglycerides fatty acid ester, fatty acid ether, N-methyl pyrrolidone, dimethylformamide, dimethylacetamide, or dimethyl sulfoxide, polyoxyethylene trimethylol propane monooleate, polyoxyethylene trimethylol propanedioleate, polyoxyethylene trimethylol propanetrioleate, polyoxyethylene sorbitan monooleate, polyoxyethylene sorbitol hexaoleate. However, those skilled in the art will appreciate that it is possible to utilize different penetrants without departing from the scope of the present invention. The penetrants are commercially manufactured and available through various companies.

According to an embodiment, the ultraviolet absorbent is selected from, but not limited to one or more of zinc oxide, titanium oxide, lignosulphonates, 2-(2'-hydroxy-5'-methylphenyl) benzotriazole, 2-ethoxy-2'-ethyloxazalic acid bisanilide, succinic acid dimethyl-1-(2-hydroxyethyl)-4-hydroxy-2,2,6,6-tetramethylpiperidine polycondensate, benzotriazole compounds such as 2-(2'-hydroxy-5'-methylphenyl)benzotriazole and 2-(2'-hydroxy-4'-n-octoxyphenyl)benzotriazole; benzophenone compounds such as 2-hydroxy-4-methoxybenzophenone and 2-hydroxy-4-n-octoxybenzophenone; salicylic acid compounds such as phenyl salicylate and p-t-butylphenyl salicylate; 2-ethylhexyl 2-cyano-3,3-diphenyl acrylate, 2-ethoxy-2'-ethyl oxalic bisanilide, and dimethyl succinate- 1-(2-hydroxyethyl)-4-hydroxy-2,2,6,6-tetramethylpiperidine polycondensate or derivatives or the like. However, those skilled in the art will appreciate that it is possible to utilize different ultraviolet absorbents, without departing from the scope of the present invention. Such ultraviolet absorbents are commercially manufactured and available through various companies.

According to an embodiment, the UV ray scattering agents include, but not limited to zinc oxide, titanium dioxide or the like may be used. However, those skilled in the art will appreciate that it is possible to utilize different UV ray scattering agents or mixtures thereof without departing from the scope of the present invention. Such UV ray scattering agents are commercially manufactured and available through various companies.

According to an embodiment, the humectant is selected from, but not limited to one or more of polyoxyethylene/polyoxypropylene copolymers, particularly block copolymers, such as the Synperonic PE series of copolymers available from Uniqema or salts, derivatives thereof. Other humectants are propylene glycol, monoethylene glycol, hexylene glycol, butylene glycol, ethylene glycol, diethylene glycol, poly (ethylene glycol), poly (propylene glycol), glycerol and the like; polyhydric alcohol compounds such as propylene glycol ether, derivatives thereof. Also other humectants include calcium chloride, sodium lactate, urea, polydextrose, sodium metaphosphate, amino acids such as proline; triacetin, etc. The non-ionic surfactants mentioned above also act as humectants. However, those skilled in the art will appreciate that it is possible to utilize other conventionally known humectants without departing from the scope of the present invention. The humectants are commercially manufactured and available through various companies.

According to an embodiment, the humectant is present in the range of 0.1% to 90% w/w of the total composition. According to an embodiment, the humectant is present in the range of 0.1% to 70% w/w of the total composition. According to an embodiment, the humectant is present in the range of 0.1% to 60% w/w of the total composition. According to an embodiment, the humectant is present in the range of 0.1% to 50% w/w of the total composition. According to an embodiment, the humectant is present in the range of 0.1% to 30% w/w of the total composition. According to an embodiment, the humectant is present in the range of 0.1% to 10% w/w of the total composition.

According to an embodiment, the pesticidal composition can include at least one further active ingredient. According to an embodiment, the active ingredient can include at least one pesticidal active; nutrients selected from macronutrients, micro nutrients; bio stimulants; fertilizer; plant growth regulators; algae and mixtures thereof. However, those skilled in the art will appreciate that it is possible to utilize other further active ingredient without departing from the scope of the present invention.

According to an embodiment, the pesticidal actives include one or more of an antifoulant, an insecticide, a fungicide, a herbicide, a nematicide, a pheromone, a defoliant, an acaricide, a plant growth regulator, an algicide, an antifeedant, an avicide, a bactericide, a bird repellent, a biopesticide, a biocide, a chemosterilant, a safener, an insect attractant, an insect repellent, an insect growth regulator, a mammal repellent, a mating disrupter, a disinfectant, a molluscicide, an antimicrobial, a miticide, an ovicide, a fumigant, a plant activator, a rodenticide, a synergist, a virucide, a microbial pesticide, a plant incorporated protectant, other miscellaneous pesticidal actives or salts or derivatives and mixtures thereof., etc. However, those skilled in the art will appreciate that it is possible to utilize other pesticidal active without departing from the scope of the present invention.

According to an embodiment, the further active ingredient can be present in the concentration range of 0.1% w/w to 90% w/w of the total composition. According to further embodiment, the active ingredient can be present in the concentration range of 0.1% w/w to 70% w/w of the total composition. According to further embodiment, the active ingredient can be present in the concentration range of 0.1% w/w to 50% w/w of the total composition.

It has been surprisingly found that the pesticidal composition of the present invention has enhanced and improved physical properties of dispersibility, suspensibility, wettability, viscosity, pourability, provides ease of handling and also reduces the loss of material while handling the product at the time of packaging as well as during field application.

According to an embodiment, viscosity of the liquid composition is determined as per CIPAC MT-192. According to an embodiment, the pesticidal composition has a viscosity at 25° C. of about 10 cps to about 3000 cps. According to an embodiment, the pesticidal composition has a viscosity at 25° C. of about 10 cps to about 2500 cps. According to an embodiment, the pesticidal composition has a viscosity at 25° C. of about 10 cps to about 2000 cps. According to an embodiment, the pesticidal composition has a viscosity at 25° C. of about 10 cps to about 1500 cps. According to an embodiment, the pesticidal composition has a viscosity at 25° C. of about 10 cps to about 1200 cps. According to an embodiment, the pesticidal composition has viscosity at 25° C. of about 10 cps to about 500 cps. According to an embodiment, the pesticidal composition has a viscosity at 25° C. of about less than 500 cps. According to an embodiment, the pesticidal composition has viscosity at 25° C. of about 10 cps to about 400 cps. According to an embodiment, the pesticidal composition has viscosity at 25° C. of about 10 cps to about 300 cps.

According to an embodiment, the liquid suspension composition of the present invention is easily pourable. The pourability is the measure of percent of residue.

According to an embodiment, the pourability of the pesticidal composition is determined as per CIPAC MT-148.1. According to a further embodiment, the pourability of the pesticidal composition is less than 5% residue. According to further embodiment, the pourability of the pesticidal composition is preferably less than 2.5% residue. According to further embodiment, the pourability of the pesticidal composition is more preferably less than 2.0% residue.

According to an embodiment, the pesticidal composition has a dispersibility of at least 30%. According to an embodiment, the pesticidal composition has a dispersibility of at least 40%. According to an embodiment, the pesticidal composition has a dispersibility of at least 50%. According to an embodiment, the pesticidal composition has a dispersibility of at least 60%. According to an embodiment, the pesticidal composition has a dispersibility of at least 70%. According to an embodiment, the pesticidal composition has a dispersibility of at least 80%. According to an embodiment, the pesticidal composition has a dispersibility of at least 90%. According to an embodiment, the pesticidal composition has a dispersibility of at least 99%. According to an embodiment, the pesticidal composition has a dispersibility of 100%. Dispersibility of the composition of the present application, was determined as per the standard CIPAC test, MT 174.

Suspensibility is defined as the amount of active ingredient suspended after a given time in a column of liquid, of stated height, expressed as a percentage of the amount of active ingredient in the original suspension. The test for suspensibility is done as per the CIPAC Handbook, "MT 184 Test for Suspensibility".

According to an embodiment, the pesticidal composition has a suspensibility of at least 30%. According to an embodiment, the pesticidal composition has suspensibility of at least 40%. According to an embodiment, the pesticidal composition has a suspensibility of at least 50%. According to an embodiment, the pesticidal composition has a suspensibility of at least 60%. According to an embodiment, the pesticidal composition has a suspensibility of at least 70%. According to an embodiment, the pesticidal composition has a suspensibility of at least 80%. According to an embodiment, the pesticidal composition has a suspensibility of at least 90%. According to an embodiment, the pesticidal composition has a suspensibility of at least 99%. According to an embodiment, the pesticidal composition has a suspensibility of 100%.

According to an embodiment, the pesticidal composition demonstrates superior stability in terms of suspensibility under accelerated storage condition (ATS). According to an embodiment, the pesticidal composition demonstrates suspensibility of at least 90% under ATS. According to an embodiment, the pesticidal composition demonstrates suspensibility of at least 80% under ATS. According to an embodiment, the pesticidal composition demonstrates suspensibility of at least 70% under ATS. According to an embodiment, the pesticidal composition demonstrates suspensibility of at least 60% under ATS. According to an embodiment, the pesticidal composition demonstrates suspensibility of at least 50% under ATS. According to an embodiment, the pesticidal composition demonstrates suspensibility of at least 40% under ATS. According to an embodiment, the pesticidal composition demonstrates suspensibility of at least 30% under ATS.

According to an embodiment, the pesticidal composition demonstrates dispersibility of at least 90% under ATS. According to an embodiment, the pesticidal composition demonstrates dispersibility of at least 80% under ATS. According to an embodiment, the pesticidal composition demonstrates dispersibility of at least 70% under ATS. According to an embodiment, the pesticidal composition demonstrates dispersibility of at least 60% under ATS. According to an embodiment, the pesticidal composition demonstrates dispersibility of at least 50% under ATS. According to an embodiment, the pesticidal composition demonstrates dispersibility of at least 40% under ATS.

According to an embodiment, the pesticidal composition demonstrates dispersibility of at least 30% under ATS.

Wettability is the condition or the state of being wettable and can be defined as the degree to which a solid is wetted by a liquid, measured by the force of adhesion between the solid and liquid phases. The wettability of the granular composition is measured using the Standard CIPAC Test MT-53 which describes a procedure for the determination of the time of complete wetting of wettable formulations. A weighed amount of the granular composition is dropped on water in a beaker from a specified height and the time for complete wetting was determined. According to another embodiment, the pesticidal composition in the form of water dispersible granules, spheronised granule or broadcast granules or water disintegrable granule has wettability of less than 2 minutes. According to another embodiment, the wettability of less than 1 minute. According to another embodiment, the pesticidal composition has wettability of less than 30 seconds.

According to an embodiment, the pesticidal composition demonstrates superior stability towards heat, light, temperature and caking. According to an embodiment, the stability exhibited by the pesticidal composition is at least 3 years. According to further embodiment, the stability exhibited by the pesticidal composition is at least 2 years. According to further embodiment, the stability exhibited by the pesticidal composition is at least 1 year. According to further embodiment, the stability exhibited by the pesticidal composition is at least 6 months.

According to an embodiment, the present invention relates to a process of preparing the pesticidal composition of the present invention comprising elemental sulphur present in the range of 1% w/w to 95 % w/w of the total composition, flupyradifurone present in the range of 0.01% w/w to 70% w/w of the total composition and atleast one agrochemically acceptable excipient.

According to another embodiment, the pesticidal composition in the form of water dispersible granules or spheronised granules or water disintegrable granule or broadcast granule, is made by various techniques such as spray drying, fluidized bed granulation, pan granulation, pin agglomerator, spheronizer, freeze drying etc. The granules can also be extruded through the extruder to obtain extruded granules.

According to an embodiment, the process of preparing a water dispersible granular pesticidal composition involves milling a blend of elemental sulphur; flupyradifurone and at least one excipient to obtain slurry or a wet mix. The process of preparing a water dispersible granular pesticidal composition, according to an embodiment, particularly involves milling a blend of elemental sulphur, flupyradifurone followed by addition of atleast one filler or carrier and at least one excipient to obtain slurry or a wet mix. The wet mix obtained is then dried, for instance in a spray dryer, fluid bed dryer or any suitable granulating equipment, followed by sieving to remove the undersized and oversized granules to obtain water dispersible granules of the desired size if required. However, those skilled in the art will appreciate that it is possible to modify or alter or change the process or process parameters to obtain water dispersible granular composition without departing from the scope of the present invention. Water is added to the dry powder and the mixture is blended to obtain a wet mass, which is then extruded through an extruder to obtain the granules of desired size. The granules can also be formed with hot melt extrusion. However, those skilled in the art will appreciate that it is possible to modify or alter or change the process or process parameters to obtain granular composition without departing from the scope of the present invention.

The granules obtained from the granulator can also be dried in open air or airdried, to remove any residual moisture, if any. However, those skilled in the art will appreciate that it is possible to modify or alter or change the process or process parameters without departing from the scope of the present invention.

According to another embodiment, the invention further relates to the process for preparing the water disintegrable granule or broadcast granule or spheronised granule which involves milling a blend of elemental sulphur; flupyradifurone and at least one excipient to obtain slurry or a wet mix. The process particularly involves milling a blend of elemental sulphur; flupyradifurone followed by addition of and atleast one excipient to obtain a wet mix. According to an embodiment the composition comprises at least one filler or carrier during the process of preparation of making the composition. The wet mix obtained is then dried, for instance in a spray dryer, fluid bed dryer or any suitable granulating equipment, followed by sieving to remove the undersized and oversized granules to obtain granules. The powder or the fine granules is further subjected to agglomeration in an agglomerator to obtain granules of size of about 0.1 mm to 6 mm. The agglomerator can include various equipment's such as a disc pelletizer or pan granulator, pin agglomerator, spheronizer, or combinations thereof.

According to an embodiment, the invention relates to a process for preparing wettable powder composition. The process comprises mixing flupyradifurone with excipients to form a dry mass using a mass mixer. Further adding elemental sulphur and other ingredients to the mixture and passing the mixture through a jet mill to obtain powder with desired particle size.

According to another embodiment, the invention relates to a process for preparing the liquid suspension composition.

According to an embodiment, the invention relates to a process of preparation of the liquid suspension pesticidal composition, the process comprising: homogenizing mixture of elemental sulphur; flupyradifurone and at least one excipient to obtain a suspension; and wet milling the obtained suspension to provide the liquid suspension composition. However those skilled in the art will appreciate that it is possible to modify or alter or change the process or process parameters without departing from the scope of the present invention.

According to an embodiment, the gel composition of the present invention is prepared by adding more amounts of viscosity modifiers to the suspension concentrate or liquid suspension composition. However, those skilled in the art will appreciate that it is possible to modify or alter or change the process or process parameters to obtain gel composition without departing from the scope of the present invention.

According to an embodiment, the invention further relates to a method of application of the composition.

According to an embodiment, the invention also relates to a method of protecting the crop, controlling plant pathogen, controlling pest, improving the crop health and growth, enhancing the crop yield, strengthening the plant, the method comprising treating at least one of a plant, crop, plant propagation material, locus or parts thereof, a seed, seedling or surrounding soil with the pesticidal composition which includes elemental sulphur present in the range of 1 % w/w to 95

% w/w of the total composition and flupyradifurone present in the range of 0.01% w/w to 70% w/w of the total composition. The composition may be sprayed directly to the plant, such as its foliage or applied to the plant propagation material, before it is sown or planted, or to the locus thereof.

The composition is applied through a variety of methods. Methods of applying to the soil include any suitable method, which ensures that the composition penetrates the soil, for example nursery tray application, in furrow application, soil drenching, soil injection, drip irrigation, sprinkler irrigation, seed treatment, seed painting and such other methods. The composition is particularly applied in the form of a foliar spray.

The rates of application or the dosage of the composition depends on the type of use, the type of crops, or the specific active ingredients in the composition but is such that the pesticidal active ingredient, is in an effective amount to provide the desired action (such as crop protection, crop yield).

According to an embodiment, the composition of the present invention is synergistic in nature and provides good control on plant pathogens such as insect pest as compared to application of individual actives. Further such combinations help in improving the crop yield, crop characteristics etc. Thus, it has been observed that the compositions of the present invention, demonstrate enhanced, efficacious and superior behavior in the fields at reduced dosage.

## A. PREPARATION EXAMPLES:

The following examples illustrate the basic methodology and versatility of the composition of the invention. It should be noted that this invention is not limited to these exemplifications and can be extrapolated to overall claimed concentration range of the components.

Example 1: Water dispersible granular formulation of 75% elemental sulphur and 5% flupyradifurone.

Water dispersible granular composition was prepared by blending 5 parts of polycarboxylate, 5 parts of lignin sulfonate sodium with water in a beaker. To the blend s added 76 parts of elemental sulphur and 5.25 parts of flupyradifurone along with 1 part of Geropon LWet F and 7.75 parts of clay. The blend obtained was milled to get a powder of less than 50 microns particle size. The powder was mixed with water in a suitable mixing equipment to form a slurry or wet mix. The slurry obtained was wet ground in suitable wet grinding equipment. The wet milled slurry obtained was spray dried at an inlet temperature less than 140°C and outlet temperature less than 90°C to get a granular powder. The composition had the particle size of about 15 microns and granule size of 2 mm. The composition had a dispersibility of 84%, suspensibility of 65%, wet sieve retention value of 0.25% and wettability of less than 20 sec. The composition further demonstrated suspensibility of about 60% and dispersibility of about 78% under accelerated storage condition.

Example 2: Water dispersible granule of 60% elemental sulphur and 8% of flupyradifurone.

The granules are prepared as per process described in example 1 by blending 61 parts of elemental sulphur, 8.5 parts of flupyradifurone, 7 parts of agrilan 789, 0.5 parts of morwet EFW, 10 parts of soap stone, and 13 parts of maltodextrin. The composition had the particle size of about 8 microns and granule size of 1.5 mm. The composition has a dispersibility of 87%, suspensibility of 73%, wettability of less than 12 sec and wet sieve retention 0.2%. The composition further demonstrated dispersibility of 75% and suspensibility of about 80% under accelerated storage condition.

Example 3: Water dispersible granule of elemental sulphur 50% and 6.7% of flupyradifurone.

The granules are prepared as per process described in example 1 by blending 50.5 parts of elemental sulphur, 7 parts of flupyradifurone, 2 parts of Supragil MSN90, 4 parts of morwet D425, 15 parts of BorresperseNA, 0.7 parts of Agrosurf WP85 , 4 parts of soapstone, 8 parts of clay and 8.8 parts of lactose. The composition had the particle size of about 20 microns and granule size of 2.5 mm. The composition has a dispersibility of 96 %, suspensibility of 78%, wettability of less than 25 sec and wet sieve retention 0.12%. The composition further demonstrated dispersibility of 90% and suspensibility of about 71% under accelerated storage condition.

Example 4: Water dispersible granules of 25% elemental sulphur and 60% flupyradifurone.

The granules are prepared as per process described in example 1 by blending 25.3 parts of elemental sulphur, 63.2 parts of flupyradifurone, 3 parts of Oparyl DT, 4 parts of Terspersee 2700, 3 parts of soapstone and 1.5 parts of silica . The composition had the particle size of about 18 microns and granule size of 2.1 mm. The composition has a dispersibility of 90 %, suspensibility of 82%, wettability of less than 30 sec and wet sieve retention 0.12%. The composition further demonstrated dispersibility of 85% and suspensibility of about 75% under accelerated storage condition.

Example 5: Liquid suspension composition of 50% elemental sulphur and 6.9% flupyradifurone.

Liquid suspension composition was prepared by mixing 50.5 part of elemental sulphur, 5.3 part of flupyradifurone, 3 parts of Soprophor 3D33, 10 parts of monoethylene glycol, 1 parts of Geropon SC/213, 0.1 parts of Dowicide A and 29.96 parts of water and homogenised by feeding them into a vessel provided with stirring facilities until the total mixture was homogeneous. Subsequently, the suspension obtained was passed through the wet mill to obtain a suspension with 7 microns particle size. Then, 0.14 part of xanthan gum was added under continuous homogenization to obtain the suspension concentrate. The composition has suspensibility of about 92%, dispersibility of 90%, wet sieve retention of 0.1%, viscosity of about 600cps, pourability of less than 1.5. The composition has suspensibility of about 89%, dispersibility of 90% and viscosity of about 650cps under accelerated storage condition.

Example 6: Liquid suspension composition of 40% elemental sulphur and 20% flupyradifurone.

Liquid suspension prepared as per example 5 and comprises 40.4 parts of elemental sulphur, 21 parts of flupyradifurone, 3 parts of soprophor 3D33, 1 part of geropon SC/213, 15 parts of propylene Glycol , 0.1 part of Kathon, 0.16 part of xanthan gum and 19.34 parts of water. The composition has particle size of about 4 micron, suspensibility of about 95%, dispersibility of 85%, viscosity of about 620cps, and pourability of less than 1.7%, wet sieve retention of 0.08%. The composition has suspensibility of about 90%, dispersibility of 80% and viscosity of about 750cps under accelerated storage condition.

Example 7: Liquid suspension composition of 25% elemental sulphur and 25% flupyradifurone

Liquid suspension prepared as per example 5 and comprises 25.3 parts of elemental sulphur , 26.3 parts of flupyradifurone, 3 parts of Agrilan 755, 4 part of Tersperse 2222, 15 parts of propylene Glycol 400, 0.1 part of Rocima BT 2S, 0.16 part of xanthan gum and 26.14 parts of water. The composition has particle size of about 6 micron, suspensibility of about 70, dispersibility of 75%, viscosity of about 800cps, and pourability of less than 2%, wet sieve retention of 0.18%. The composition has suspensibility of about 65%, dispersibility of 71% and viscosity of about 820cps under accelerated storage condition.

Example 8: Wettable powder of 90% elemental sulphur and 5% flupyradifurone.

Wettable powder is prepared by mixing 91 parts of sulphur, 5.05 parts of flupyradifurone, 1.5 part of sodium dodecyl sulphate, 0.45 parts of precipitated silica and 2 parts of clay. The obtained mixture is passed through jet mill to get particles with size of about 7.5 microns with suspensibility of 77% wettability of 15 seconds, dispersibility of 80%. The composition has suspensibility of about 72%, dispersibility of 75% under accelerated storage condition.

Example 9: Wettable powder of 80% elemental sulphur and 10% flupyradifurone.

The composition is prepared as per example 8 which comprises 81 parts of sulphur technical, 10.5 parts of flupyradifurone , 2.5 parts of dispersol CBZ and 6 parts of soapstone. The composition has particle size of 9microns, suspensibility of 70%, dispersibility of 73%, and wettability of 11 seconds. The composition has suspensibility of about 65%, dispersibility of 68% under accelerated storage condition.

Example 10: Water disintegrable granular composition of 30% sulphur and 50% flupyradifurone.

The composition was prepared by blending 30 part of elemental sulphur and 50 part of flupyradifurone, 3 parts of Morwet D500, 4.93 parts of Borresperse CA, 3 parts of precipitated silica and 9.07 parts of talc to obtain a blend. The blend obtained was milled to get a powder of less than 50-micron particle size. The powder was mixed with water in a suitable mixing equipment to form a slurry. The slurry obtained was wet ground in suitable wet grinding equipment. The wet milled slurry obtained was spray dried at an inlet temperature less than 180° C. and outlet temperature less than 85° C. to get a granular powder with less moisture. The spray dried powder thus obtained was subjected to agglomeration in a fluid bed dryer, followed by a pin agglomerator and a pan granulator. The speed of the pan granulator was kept at around 35 rpm, to obtain the agricultural granular composition. Water was incorporated at the time of agglomeration. The granules obtained were then further dried in a post fluid bed drier to remove residual moisture, at a temperature around 70°C .

The sample had a granule size of 5 mm, particle size of 30micron. The granular composition had wettability of less than 100 second, suspensibility of 50% and dispersibility of 47%. The composition further demonstrated dispersibility of 41% and suspensibility of about 46% under accelerated storage condition.

Example 11: Water disintegrable granular composition of 65% sulphur and 20% flupyradifurone.

The spheronised granules are prepared as per example 10 which comprises 61 parts of sulphur technical, 20.5 parts of flupyradifurone, 0.5 parts of precipitated silica, 5 parts of Himsperse 0501 and 5 parts of Reax 88B and 8 parts of naphthalene sulphonate condensate. The sample had a granule size of 4 mm, particle size of 22 micron. The granular composition had wettability of less than 80 second, suspensibility of 55% and dispersibility of 50%. The composition further demonstrated dispersibility of 44% and suspensibility of about 50% under accelerated storage condition.

**B. FIELD STUDIES**

**Experiment 1: To study the effect of combination of elemental sulphur and flupyradifurone on cotton crop against jassids.**

The field trials were carried out to study the effect of combination of elemental sulphur and flupyradifurone on insect pest in cotton crop. The trial was laid out during kharif season i.e. June to August in Randomized Block Design (RBD) with seven treatments including untreated control, replicated three times. The test product sample, sulphur and flupyradifurone, alone and in combination with prescribed dose were applied as foliar application. Two applications was given at 10 days interval. Number of jassids per leaf area were recorded at 7-10 days after 1st application & 2nd application respectively. The cotton crop in trial field was raised following good agricultural practice.

**Details of experiment**

| | |
|---|---|
| a) Trial Location | : Anand, Gujarat |
| b) Crop | : Cotton (2 mths crop, Var; Bt Cotton) |
| c) Target Pathogen | : Jassid (Amrasca biguttula biguttula) |
| c) Experiment season | : Kharif |
| d) Trial Design | : RBD |
| e) Treatment | : Seven |
| f) Plot size | : 5 m x 6 m = 30 sq.m |
| g) Date of application | : 07.07.2021 (1st application); 17.07.2021 (2nd application) |
| h) Method of application | : Foliar application |

It can be observed from the data presented in table 1 that composition comprising elemental sulphur and flupyradifurone in the form of liquid suspension or water dispersible granule prepared as per embodiment of the present invention is synergistic in nature and effective in controlling jassids on cottton.

"Synergy" is as defined by Colby S. R. in an article entitled "Calculation of the synergistic and antagonistic responses of herbicide combinations" published in Weeds, 1967, 15, p. 20-22.

The action expected for a given combination of two active components can be calculated as follows:

$$E = \quad X + Y \ - (XY/100)$$

Where,

E= Expected % effect by mixture of two products X and Y in a defined dose.
X= Observed % effect by product A
Y= Observed % effect by product B
The synergy factor (SF) is calculated by Abbott's formula (Abbott, 1925).
SF= Observed effect /Expected effect

Where, SF >1 for Synergistic reaction; SF<1 for antagonistic reaction; SF=1 for additive reaction.

When the percentage of yield effect observed (E) for the combination is greater than the expected percentage, synergistic effect of the combination can be inferred. When the percentage of yield effect observed for the combination is equal to the expected percentage, merely an additive effect may be inferred, and wherein the percentage of yield effect observed for the combination is lower than the expected percentage, an antagonistic effect of the combinations can be inferred.

The observation on cotton were recorded at 7-10 days after first spray and 7-10 days after second spray from each plot and the percentage control was calculated from the mean value using following formula:

Control (%) = [Damage in control plot -Damage in treated plot) /Damage in control plot] X 100

The data on control against jassids along with the yield was recorded at harvest and is presented in the Table 1.

Table 1: Efficacy of combination of elemental sulphur and flupyradifurone on jassids in cotton crop

| Treatm ents No | Treatmen ts | Form ulatio n dose (Gm/ ha) | Gm of active/ha | | Number of Jassid per leaf area from 3 randomly selected leaves/3 plants (days after spray | | | | | Mea n | % Redu ction over contr ol |
| | | | sulph ur | flupy radif uron e | BF | 7D AA 1 SP | 10 DA A1 SP | 7DAA 2SP | 10DA A2SP | | |
| 1 | Sulphur 50% + Flupyrad ifurone 6.7% SC | 3750 | 1875 | 251 | 2.3 | 0.5 | 1.5 | 3.5 | 55 | 2.7 | 83.3[+] |
| 2 | Sulphur 75% + Flupyrad ifurone 10% WDG | 2500 | 1875 | 250 | 3.2 | 0.7 | 2.1 | 3.7 | 5.1 | 2.9 | 81.8[+] |
| 3 | Sulphur 60% + Flupyrad ifurone 8% WDG | 3125 | 1875 | 250 | 2.1 | 0.4 | 1.9 | 4.2 | 4.5 | 2.8 | 82.8[+] |
| 4 | Sulphur 50% + Flupyrad ifurone 6.7% WDG | 3750 | 1875 | 251 | 0.5 | 0.3 | 1.2 | 3.8 | 6.1 | 2.9 | 82.2[+] |
| 5 | Sulphur 80% WD G | 2344 | 1875 | 0 | 1.5 | 3.5 | 8.5 | 13 | 15 | 9.8 | 39 |
| 6 | Flupyrad ifurone 17.09%S L | 1460 | 0 | 250 | 3.2 | 2.5 | 5.6 | 8.5 | 8.3 | 6.2 | 61 |
| 7 | Untreate d check | NA | | | 1.7 | 10 | 16 | 19 | 18 | 16 | |
| + : Synergistic; BS- Before spray; 7DAA 1st spray- 10 Days after first spray; 10DAA 2nd spray- 10 Days after second spray; SC- suspension concentrate; WDG/WG-water dispersible granules | | | | | | | | | | | |

The trial data in Table 1 indicates that the composition of sulphur and flupyradifurone is effective against the insect pest on cotton. For instance, on comparing treatment T2 (Sulphur 75% + Flupyradifurone 10% water dispersible granules) and T1 (Sulphur 50% + Flupyradifurone 6.7% liquid suspension) applied at 3000gm/ha and 2000gm/ha respectively with T5 (Sulphur 80% WDG) and T6 (Flupyradifurone 17.09%SL) it was observed that treatment T1 and T2 demonstrated 83.3% and 81.8% control respectively against jassids whereas T5 demonstrated 39% control and T6 depicted 61% control against jassids. It was also observed that the treatments were not phytotoxic. The pest control data as presented in table 1 clearly indicates that the combination of sulphur and flupyradifurone with the particles less than 50 microns is synergistic in nature.

**Experiment No 2:** To study the effect of combination of elemental sulphur and flupyradifurone on whiteflies in cucumber.

The field trials were carried out to study the effect of combination of elemental sulphur and flupyradifurone on insect pest in cucumber crop. The trial was laid out during kharif season i.e. June to August in Randomized Block Design (RBD) with six treatments including untreated control, replicated three times. The test product sample, sulphur and flupyradifurone, alone and in combination with prescribed dose were applied as foliar application. Two applications was given at 10 days interval. Number of whiteflies per leaf area were recorded at 7-10 days after 1st application & 2nd application respectively. The cucumber crop in trial field was raised following good agricultural practice.

**Details of experiment**

a) Trial Location : Indore MP,
b) Crop : Cucumber, one month crop
c) Target Pathogen : Whitefly (Bemisia tabaci)
d) Experiment season : Kharif (July, 2021-Aug,2021)
e) Trial Design : RBD
f) Treatment : Six
g) Plot size : 5 m x 6 m = 30 sq.m
h)Time of first application: : at2-3 whitefly/leaf;
i) Date of application : 15.07.2021 (1st application); 25.07.2021 (2nd application)
j) Method of application : Foliar application

The observation on cotton were recorded at 7-10 days after first spray and 7-10 days after second spray from each plot and the percentage control was calculated from the mean value using following formula:

Control (%) = [Damage in control plot -Damage in treated plot) /Damage in control plot] X 100

The data on control against whteflies along with the yield was recorded at harvest and is presented in the Table 2.

Table 2: Efficacy of combination of elemental sulphur and flupyradifurone on whiteflies in cucumber crop

| Treatment no | Treatments | Gm of a.i/ha | | Number of Whitefly per leaf from 3 randomly selected leaves/3 plants (days after spray) | | | | | **Mean** | % Reduction over control | Yeild (Qtl/ha) |
|---|---|---|---|---|---|---|---|---|---|---|---|
| | | Sulphur | Flupyradifurone | BF | 7DAA1SP | 10DAA1SP | 7DAA2SP | 10DAA2SP | | | |
| 1 | Sulphur 15% + Flupyrad ifurone 25% SC @ 3000 gm/ha | 450 | 750 | 4.2 | 0.54 | 2.1 | 3.2 | 1.1 | 1.7 | 84.9[+] | 120 |
| 2 | S 30% + Flupyrad ifurone 50% WDG @ 1500 gm/ha | 450 | 750 | 2.1 | 0.5 | 1.4 | 1.9 | 0.9 | 1.2 | 89.8[+] | 125 |
| 3 | Sulphur 80% WG @ 563 Gm/ha | 450 | | 3.5 | 2.1 | 6.9 | 9.1 | 14 | 8 | 30.1 | 110 |
| 4 | Flupyrad ifurone 17.09%S L @4390 gm/ha | | 750 | 2.6 | 2.9 | 3.5 | 6.2 | 3.9 | 4.1 | 64.1 | 109 |
| 5 | Untreate d check | | | 3.1 | 7.3 | 8.8 | 15.3 | 14.5 | 11.5 | | 100 |
| +: Synergistic; BS- Before spray; 7DAA 1st spray- 10 Days after first spray; 10DAA 2nd spray- 10 Days after second spray; SC- suspension concentrate; WDG/WG-water dispersible granules | | | | | | | | | | | |

From the data presented in Table 2, it clearly indicates that the combination of elemental sulphur and flupyradifurone is synergistic and effective against whiteflies in cucumber crop. For instance, it is observed that treatment

**EP 4 203 686 B1**

T1 (Sulphur 15% + Flupyradifurone 25% SC@3000gm/ha) demonstrates 84.9 % control over whiteflies whereas treatment T3 (Sulphur 80% WDG) demonstrates 30.1% control and treatment T4 demonstrate (Flupyradifurone 17.09%SL) demonstrates 64.1% control against whiteflies in cucumber. Moreover, treatment T2 (S 30% + Flupyradifurone 50% WDG @ 1500 gm/ha) demonstrated 89.8% control over whiteflies. The yield observed with treatments T1, T2 is about 120Qtl/ha and 125 Qtl/ha respectively whereas with treatment T3 and T4 the yield is about 110 Qtl/ha and 109 Qtl/ha respectively. It was also observed that the treatments were not phytotoxic in nature. The pest control data as presented in table 2 clearly indicates that the combination of sulphur and flupyradifurone with the particles less than 50 microns is effective against whiteflies and also demonstrate better yield than individual treatments.

**Claims**

1. A pesticidal composition, comprising:

   elemental sulphur in the range of 1%w/w to 95% w/w of the total composition;
   flupyradifurone present in the range of 0.01% w/w to 70% w/w of the total composition; and,
   at least one agrochemically acceptable excipient.

2. The pesticidal composition as claimed in claim 1, wherein the composition comprises particles in the size range of from 0.1 micron to 50 microns.

3. The pesticidal composition as claimed in claim 1, wherein the composition is in the form of a solid or a liquid or a gel.

4. The pesticidal composition as claimed in claim 3, wherein the solid composition is in the form of water dispersible granules, water disintegrable granules or broadcast granules or spheronised granules, wettable powder.

5. The pesticidal composition as claimed in claim 4, wherein the water disintegrable granules or broadcast granules or spheronised granules are in the size range of from 0.1 to 6 mm.

6. The pesticidal composition as claimed in claim 4, wherein the water dispersible granules are in the size range of from 0.1 to 2.5 mm.

7. The pesticidal composition as claimed in claim 3, wherein the liquid composition is in the form of flowable concentrate, liquid suspension.

8. The pesticidal composition as claimed in claim 1, wherein the composition further comprises at least one active ingredient selected from macronutrients, micro nutrients; bio stimulants; fertilizer; pesticidal actives; plant growth regulators; algae and mixtures thereof.

9. The pesticidal composition as claimed in claim 1, wherein the agrochemically acceptable excipient is selected from at least one of surfactants, binders or binding agents, wetting agent, emulsifiers, disintegrating agents, fillers or carriers or diluents, coating agents, buffers or pH adjusters or neutralizing agents, antifoaming agents or defoamers, penetrants, ultraviolet absorbents, UV ray scattering agents, stabilizers, pigments, colorants, structuring agents, chelating or complexing or sesquitering agents, structuring agent, thickeners, suspending agents or suspension aid agents or anticaking agents or anti-settling agents, viscosity modifiers or rheology modifiers, tackifiers, humectants, sticking agents, anti-freezing agent or freeze point depressants, solvents and mixtures thereof.

10. The pesticidal composition as claimed in claim 7, wherein the composition has viscosity of 10 cps to 3000cps.

11. A method of treating at least one of a plant, crop, plant propagation material, locus, parts thereof or seed, seedling, soil with the composition as claimed in claim 1.

22

**Patentansprüche**

1. Pestizidzusammensetzung, umfassend:

   elementaren Schwefel im Bereich von 1 Gew.-% bis 95 Gew.-% der Gesamtzusammensetzung;
   Fupyradifuron, das im Bereich von 0,01 Gew.-% bis 70 Gew.-% der Gesamtzusammensetzung vorhanden ist;
   und
   wenigstens einen agrochemisch annehmbaren Hilfsstoff.

2. Pestizidzusammensetzung gemäß Anspruch 1, wobei die Zusammensetzung Teilchen im Größenbereich von 0,1 $\mu$m bis 50 $\mu$m umfasst.

3. Pestizidzusammensetzung gemäß Anspruch 1, wobei die Zusammensetzung in Form eines Feststoffs oder einer Flüssigkeit oder eines Gels vorliegt.

4. Pestizidzusammensetzung gemäß Anspruch 3, wobei die feste Zusammensetzung in Form eines wasserdispergierbaren Granulats, wasserzerfallenden Granulats oder Streugranulats oder sphäronisierten Granulats oder benetzbaren Pulvers vorliegt.

5. Pestizidzusammensetzung gemäß Anspruch 4, wobei das wasserzerfallende Granulat oder Streugranulat oder sphäronisierte Granulat im Größenbereich von 0,1 bis 6 mm vorliegt.

6. Pestizidzusammensetzung gemäß Anspruch 4, wobei das wasserdispergierbare Granulat im Größenbereich von 0,1 bis 2,5 mm vorliegt.

7. Pestizidzusammensetzung gemäß Anspruch 3, wobei die flüssige Zusammensetzung in Form eines fließfähigen Konzentrats oder einer flüssigen Suspension vorliegt.

8. Pestizidzusammensetzung gemäß Anspruch 1, wobei die Zusammensetzung weiterhin wenigstens einen Wirkstoff umfasst, der aus Makronährstoffen, Mikronährstoffen, Biostimulantien, Dünger, pestiziden Wirkstoffen, Pflanzenwachstumsregulatoren, Algen und Gemischen davon ausgewählt ist.

9. Pestizidzusammensetzung gemäß Anspruch 1, wobei der agrochemisch annehmbare Hilfsstoff ausgewählt ist aus wenigstens einem aus Tensiden, Bindemitteln, Netzmitteln, Emulgatoren, Sprengmitteln, Füllstoffen oder Trägern oder Verdünnungsmitteln, Überzugsmitteln, Puffern oder pH-Regulatoren oder Neutralisationsmitteln, Schaumverhütungsmitteln, Penetriermitteln, UV-Absorbentien, UV-Streumitteln, Stabilisatoren, Pigmenten, Färbemitteln, Strukturierungsmitteln, Chelatbildnern oder Komplexbildnern oder Sequestrierungsmitteln, Strukturierungsmittel, Verdickungsmitteln, Suspensionsmitteln oder Suspensionshilfsmitteln oder Trennmitteln oder Antiabsetzmitteln, Viskositätsmodifikatoren oder Rheologiemodifikatoren, Klebrigmachern, Feuchthaltemitteln, Klebemitteln, Gefrierschutzmitteln oder Gefrierpunktsabsenkern, Lösungsmitteln und Gemischen davon.

10. Pestizidzusammensetzung gemäß Anspruch 7, wobei die Zusammensetzung eine Viskosität von 10 cP bis 3000 cP aufweist.

11. Verfahren zur Behandlung von wenigstens einem aus Pflanze, Feldfrucht, pflanzlichem Fortpflanzungsmaterial, Standort, Teilen davon oder Samen, Sämlingen und Böden mit der Zusammensetzung gemäß Anspruch 1.

**Revendications**

1. Composition pesticide qui comprend :

   du soufre élémentaire en une quantité qui se situe dans la plage allant de 1 % en poids/poids à 95 % en poids/poids de la composition totale ;
   de la flupyradifurone qui est présente dans la plage allant de 0,01 % en poids/poids à 70 % en poids/poids de la composition totale ; et
   au moins un excipient acceptable du point de vue agrochimique.

**2.** Composition pesticide telle que revendiquée à la revendication 1, dans laquelle la composition comprend des particules dont la dimension se situe dans la plage allant de 0,1 micron à 50 microns.

**3.** Composition pesticide telle que revendiquée à la revendication 1, dans laquelle la composition se présente sous la forme d'un produit solide ou d'un liquide ou d'un gel.

**4.** Composition pesticide telle que revendiquée à la revendication 3, dans laquelle la composition solide se présente sous la forme de granulés dispersables dans l'eau, de granulés désintégrables dans l'eau ou de granulés à épandre ou de granulés sphéronisés, d'une poudre mouillable.

**5.** Composition pesticide telle que revendiquée à la revendication 4, dans laquelle les granulés désintégrables dans l'eau ou les granulés à épandre ou les granulés sphéronisés possèdent une dimension qui se situe dans la plage allant de 0,1 à 6 mm.

**6.** Composition pesticide telle que revendiquée à la revendication 4, dans laquelle les granulés dispersables dans l'eau possèdent une dimension qui se situe dans la plage allant de 0,1 à 2,5 mm.

**7.** Composition pesticide telle que revendiquée à la revendication 3, dans laquelle la composition liquide se présente sous la forme d'un concentrat apte à s'écouler, d'une suspension liquide.

**8.** Composition pesticide telle que revendiquée à la revendication 1, dans laquelle la composition comprend en outre au moins un ingrédient actif qui est choisi parmi des macronutriments, des micronutriments, des biostimulants, des engrais, des agents manifestant une activité pesticide, des régulateurs de la croissance des plantes, des algues, ainsi que des mélanges desdits ingrédients.

**9.** Composition pesticide telle que revendiquée à la revendication 1, dans laquelle l'excipient acceptable du point de vue agrochimique représente au moins un élément qui est choisi parmi des agents tensioactifs, des liants ou des agents de liaison, des agents mouillants, des émulsifiants, des agents de désintégration, des matières de charge ou des supports ou des diluants, des agents d'enrobage, des tampons ou des agents qui ajustent le pH ou des agents de neutralisation, des agents qui empêchent la formation de mousses ou des agents antimousse, des agents d'imprégnation, des agents qui absorbent le rayonnement ultraviolet, des agents de diffusion du rayonnement ultraviolet, des stabilisateurs, des pigments, des colorants, des agents structurants, des agents chélateurs ou des formateurs de complexes ou des séquestrants, des agents de structuration, des agents épaississants, des agents de mise en suspension ou des adjuvants de mise en suspension ou des agents s'opposant à l'agglutination ou des agents s'opposant à la sédimentation, des modificateurs de la viscosité ou des modificateurs de la rhéologie, des agents donnant du collant, des agents humidifiants, des adhésifs, des agents antigel ou des agents qui abaissent le point de congélation, des solvants, ainsi que des mélanges de ces divers excipients.

**10.** Composition pesticide telle que revendiquée à la revendication 7, dans laquelle la composition possède une viscosité de 10 cP à 3000 cP.

**11.** Procédé de traitement d'au moins un élément qui est choisi parmi une plante, une récolte, un matériel de multiplication des plantes, un emplacement précis, des parties des éléments que l'on vient de citer, ou une semence, un semis, un sol, avec la composition telle qu'elle est revendiquée à la revendication 1.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015230475 A
- WO 2018195256 A
- WO 2019064283 A1
- WO 2020061706 A

**Non-patent literature cited in the description**

- **COLBY S. R.** Calculation of the synergistic and antagonistic responses of herbicide combinations. *Weeds*, 1967, vol. 15, 20-22